# EUROPÄISCHE PATENTSCHRIFT

(11) **EP 3 441 635 B1**
(45) Veröffentlichungstag und Bekanntmachung des Hinweises auf die Patenterteilung: **02.12.2020**
(21) Anmeldenummer: 18185414.2
(22) Anmeldetag: 25.07.2018
(51) Int. Cl.: B02C 18/14, B02C 18/16, B02C 19/00, F16C 33/76, F16C 33/78, F16C 33/80, B30B 3/00, B30B 9/32

(54) **LAGERANORDNUNG SOWIE DAMIT AUSGESTATTETE BEARBEITUNGS-VORRICHTUNG**
BEARING ARRANGEMENT AND MACHINING DEVICE EQUIPPED WITH SAID BEARING ARRANGEMENT
PALIER AINSI QUE DISPOSITIF ÉQUIPÉ D'UN TEL DISPOSITIF PALIER

(30) Priorität: 09.08.2017 DE 102017118068; 09.04.2018 DE 102018108300
(43) Veröffentlichungstag der Anmeldung: 13.02.2019
(73) Patentinhaber: Schwelling, Hermann, 88682 Salem (DE)
(72) Erfinder: Schwelling, Hermann, 88682 Salem (DE)
(74) Vertreter: Weickmann & Weickmann PartmbB

(56) Entgegenhaltungen:
- EP-A1- 3 098 068
- DE-A1-102014 010 609
- GB-A- 548 051
- US-A- 3 860 180

## Beschreibung

### I. Anwendungsgebiet

Die Erfindung betrifft eine Lageranordnung für eine drehend gelagerte Welle mit einer Abstreifvorrichtung für an der Welle vorhandene Verunreinigungen.

### II. Technischer Hintergrund

Bei einer Vielzahl von Bearbeitungsvorrichtungen, die wenigstens eine rotierende Bearbeitungs-Welle zum Bearbeiten von Objekten aufweisen, und bei denen während der Bearbeitung Verunreinigungen an der Welle auftreten können, besteht ein Problem darin, die Lagerung einer solchen Welle gegen das Eindringen von Verunreinigungen zu sichern, was üblicherweise mittels einer Dichtung am Lager versucht wird.

Wenn die Verunreinigungen jedoch entweder aus stark abrasiv wirkenden Feststoffen und/oder aus zähen Flüssigkeiten bestehen, ist es schwierig, eine solche Abdichtung zu schaffen, die das Eindringen sowohl von Flüssigkeiten als auch von Feststoffen zuverlässig vermeidet.

Gelangen Verunreinigungen in das Lager, so können diese das Lager sehr schnell zerstören, vor allem wenn es sich bei den Flüssigkeiten um solche Flüssigkeiten handelt, die sich schnell in einen harten, abrasiven Feststoff umwandeln können.

Eine typische solche Bearbeitungsvorrichtung sind beispielsweise Maschinen, mit denen Objekte wie etwa leere Kunststoffflaschen oder Aluminiumdosen, die von den Verbrauchern zurückgegeben werden, kompaktiert und/oder dabei perforiert und/oder in Stücke geschnitten werden:
Denn diese Behälter enthalten häufig noch einen Rest ihres ursprünglichen Inhaltes, und dies ist meist eine stark zuckerhaltige Flüssigkeit, die in Ruhe und bei entsprechender Temperatur in wenigen Stunden zu Zucker kristallisiert.

In diesen Maschinen wird die Bearbeitung meistens dadurch durchgeführt, dass die Gegenstände oder Behälter zwischen zwei gegenläufig rotierenden, teilweise miteinander kämmenden, Walzen hindurchgeführt werden, wobei zum Entweichen des Überdruckes häufig auch eine Perforation vorgesehen ist, und auf diese Art und Weise - erst recht beim Zerschneiden in einzelne Teile - der Restinhalt aus dem Behälter austreten kann und die Bearbeitungs-Welle zumindest in ihrem mittleren Bereich, dem Bearbeitungsbereich, verschmutzt.

Da die Flüssigkeit auch an die Außenwände spritzt und an diesen herabläuft, gelangt diese Flüssigkeit auch auf den Umfang des Wellenzapfens, der die Gehäusewand durchläuft und in dem - ohnehin schon auf der Außenseite der Gehäusewand angeordneten - Lager gelagert ist.

Um es zu erschweren, dass die Flüssigkeit entlang des Lagerzapfens durch die Gehäusewand hindurch zum Lager der Welle gelangt, ist es bereits bekannt, beabstandet zu der Gehäusewand auf deren Außenseite eine Lagerplatte vorzusehen, an der - vorzugsweise wieder an deren Außenseite - das Lager für die Welle angeordnet ist, um so den axialen Abstand zwischen dem mittleren Bearbeitungsabschnitt der Welle und dem endseitigen Lager zu vergrößern.

Dabei ist es unerheblich, ob die Lagerplatte, von der das Lager gehalten wird, außerhalb der Gehäusewand zusätzlich angeordnet wird und die Gehäusewand als Spritzschutzwand dient, oder die Gehäusewand selbst die Lagerplatte ist, und an dieser auf der Innenseite beabstandet zur Gehäusewand/Lagerplatte eine zusätzliche Spritzschutzwand angeordnet wird.

Unabhängig davon wird der Durchlass in der jeweiligen Wand oder Platte für die Welle so klein wie möglich dimensioniert, um ein Hindurchdringen von insbesondere flüssigen Verunreinigungen in axialer Richtung entlang der Welle zu erschweren.

In dem Durchlass kann auch jeweils eine an der Welle anliegende Dichtung, beispielsweise aus Kunststoff, vorgesehen werden, jedoch wird diese in der Praxis durch den z.B. bei Stillstand der Vorrichtung über Nacht auskristallisierenden Zucker beim wieder in Betrieb nehmen sehr schnell zerstört.

DE 10 2014 010609 A1 offenbart eine Lageranordnung gemäß dem Oberbegriff des Anspruchs 1.

EP 3 098 068 A1 offenbart eine Lageranordnung mit einer Dichtung.

GB 548 051 A offenbart eine ringförmige Dichtung, die direkt auf dem Innenring eines Lagers anliegt.

US 3 860 180 A offenbart spitzwinklige Kanten von Schneidwalzen.

### III. Darstellung der Erfindung

### a) Technische Aufgabe

Es ist daher die Aufgabe gemäß der Erfindung, eine Lageranordnung sowie eine damit ausgestattete Bearbeitungs-Vorrichtung zur Verfügung zu stellen, die das Vordringen von Verunreinigungen aus dem mittleren Bearbeitungsabschnitt der Bearbeitungswelle zu deren endseitig angeordneten Lagern weitestgehend verhindert.

### b) Lösung der Aufgabe

Diese Aufgabe wird durch die Merkmale der Ansprüche 1 und 15 gelöst. Vorteilhafte Ausführungsformen ergeben sich aus den Unteransprüchen.

Diese Aufgabe wird erfindungsgemäß dadurch gelöst, dass nicht nur der Weg für Verunreinigungen in axialer Richtung von dem Bearbeitungsbereich der Welle bis zur Lageranordnung vergrößert wird - was leider den Nachteil eines größeren Lagerabstandes und damit einer notwendigen höheren Stabilität der Welle nach sich zieht - sondern dazwischen eine Abstreifvorrichtung vorgesehen wird, die bereits in Richtung Lager vorgedrungene Verunreinigungen von der Bearbeitungswelle in diesem Abstreif-Abschnitt wieder entfernt.

Hinsichtlich der Lageranordnung wird gegenüber der gattungsgemäßen Lageranordnung gemäß Oberbegriff des Anspruchs 1 die Aufgabe dadurch gelöst, dass zwischen der in axialer Richtung der Bearbeitungs-Welle beabstandeten Lagerplatte und einer Spritzschutzwand eine Abstreifvorrichtung mit einem Abstreifer vorhanden ist und dieser Abstreifer direkt oder indirekt an der Welle - also der Welle selbst oder einem auf der Welle drehfest befestigten Wellen-Teil wie etwa einem Ring, insbesondere einer Ring-Scheibe - anliegt und dort vorhandene Verunreinigungen abstreift.

"Die Spritzschutzwand kann auch aus zwei Teilen bestehen, die sich insbesondere in der Höhe überlappen, wobei die Spritzschutzwand vorzugsweise nach unten frei ausläuft und/oder die die beiden Teile an den vorzugsweise gesamten Umfang der Bearbeitungswelle von zwei Seiten nahe heran reichen."

Wenn ein solches separates Wellen-Teil auf dem Abstreifabschnitt der Welle befestigt ist und mit dieser mitdreht, darf natürlich zwischen dem mitdrehenden Teil, wie etwa der Scheibe oder dem Ring, und der Welle kein so großer Spalt vorhanden sein, dass Verunreinigungen durch diesen Spalt zwischen Außenumfang der Welle und Innenumfang des darauf drehfest befestigten Teil axial hindurchtreten kann, denn dann ist der am Außenumfang oder an einer Radialfläche anliegende Abstreifer diesbezüglich wirkungslos.

Im Folgenden ist nur noch von der Anlage an der Bearbeitungswelle die Rede, was immer impliziert, dass damit auch die Anlage an einem separaten, mitdrehenden, auf der Bearbeitungswelle dicht befestigten, Wellen-Teil im Abschnitt der Bearbeitungswelle mit umfasst sein soll.

An einer solchen rotierenden Umfangs- oder Stirnfläche, also insbesondere einer radial liegenden Stirnfläche oder Ringfläche, kann ein nicht drehender Abstreifer anliegen oder auch ein um eine andere Rotationsachse als die der Welle rotierender Abstreifer.

Der nicht mit der abzustreifenden Welle mitdrehende Abstreifer wird im Folgenden feststehender Abstreifer genannt, obwohl er vorzugsweise
- in axialer Richtung, also der Richtung der Rotationsachse der Welle, durchaus beweglich befestigt sein kann, insbesondere dafür, damit er mittels Vorspannung, insbesondere mittels einer Feder, in axialer Richtung immer in Anlage an der Schulter oder radialen Fläche der Bearbeitungswelle gehalten werden kann, auch wenn diese temperaturbedingt einer Längendehnung unterworfen ist, vor allem auf Seite des Loslagers, weniger auf Seiten des Festlagers,
   und/oder
- um eine Schwenkachse, die beispielsweise parallel zur Rotationsachse der Bearbeitungswelle liegt, begrenzt verschwenkbar sein kann, um gegebenenfalls unter Vorspannung am Umfang der Bearbeitungswelle anzulegen.

Ein solcher feststehender Abstreifer ist plattenförmig gestaltet und an einer in axialer Richtung verlaufenden Führung, insbesondere einer Führungsstange, in axialer Richtung beweglich geführt. Diese Führung, insbesondere Führungsstange, ist direkt oder indirekt an der Spritzschutzwand oder der Lagerplatte befestigt, insbesondere zwischen zwei gegenüberliegenden Lagerplatten verschraubt.

Insbesondere am vorderen Ende dieses Abstreifers und/oder entlang der Umfangskontur des Abstreifers ist eine Abstreifkante als vorderes Ende eines spitzwinkligen, vorzugsweise mit einem spitzen Winkel von unter 45° ausgestatteten, Abstreif-Fortsatzes ausgebildet, die an dem Abstreifabschnitt anliegt, sei es axial und/oder radial.

Der Umfang der Bearbeitungswelle, an dem die Abstreifkante in radialer Richtung anliegt, kann der Boden einer an dem Abstreifabschnitt der Bearbeitungswelle ausgebildeten Umfangsnut sein. Die radiale Schulter, an der die Abstreifkante axial anliegt, kann die Seitenflanke einer solchen Umfangsnut sein, wobei der Abstreifer auch nur an einer der Seitenflanken anliegen kann, oder aufgrund spielbehaftete Befestigung des Abstreifers auch abwechselnd an den beiden Flanken der rotierenden Nut angreifen kann.

Jedoch kann an jeder der beiden Seitenflanken einer solchen Umfangsnut ein separater, insbesondere plattenförmiger, Abstreifer anliegen. Die axiale Vorspannung kann dann durch eine Druckfeder zwischen den beiden Abstreifern in axialer Richtung aufgebracht werden.

Auch für die radiale Anlage des Abstreifers an einem Umfang kann eine Vorspannung vorgesehen sein, beispielsweise mittels einer Drehfeder, die den an einer vom Querschnitt her runden Führungsstange geführten Abstreifer in Anlagerichtung gegen den Umfang vorspannt.

Der Abstreifer sollte bei radialer Anlage vorzugsweise unterhalb der Mitte des Umfanges an diesem anliegen, um abgestreifte Verunreinigungen, die sich vom Abstreifer lösen, leichter nach unten herabfallen zu lassen.

Ein Abstreifer kann sich jedoch auch relativ zu der zu reinigenden Welle bewegen, insbesondere rotieren um eine Rotationsachse, die beispielsweise parallel zu der Rotationsachse der zu reinigenden Welle und zu dieser beabstandet liegt.

Dabei greift ein solcher rotierender Abstreifer - der vorzugsweise als Abstreifscheibe ausgebildet ist, die dann einen vorzugsweise kreisförmigen Umfang besitzt sowie eine sich radial nach außen erstreckende, meist ringförmige, Stirnfläche - an einer ebenfalls in radialer Richtung liegenden Schulter, der Anlagefläche, des Abstreif-Abschnittes der Welle in axialer Richtung an.

An dieser Stelle sei klargestellt, dass die Anlagefläche oder Schulter - sei es auf Seiten der Bearbeitungswelle oder auf Seiten des Abstreifers, die zusammenwirken - als radial liegend bezeichnet wird, auch wenn diese nur primär in radialer Richtung gerichtet ist, also von dieser auch abweichen kann, insbesondere um bis zu +/ -45°.

Die beiden Schultern oder radial liegenden Flächen überlappen also in radialer Richtung. Zwischen den beiden Schultern gibt es immer eine Relativgeschwindigkeit, auch wenn die beiden Schultern mit entgegengesetzten Drehrichtungen, also die eine im Uhrzeigersinn die andere im Gegen-Uhrzeigersinn, rotieren oder nur eine davon rotiert.

Da der rotierende Abstreifer in der Regel einen kreisförmigen Außenumfang besitzt, ist eine radiale Anlage des rotierenden Abstreifers an einer Umfangsfläche der zu reinigenden Welle oder eines ihrer Einzelteile nicht sinnvoll.

Vorzugsweise sind die beiden miteinander axial in Kontakt stehenden Schultern oder Stirnflächen jeweils an einer Abstreif-Scheibe ausgebildet, von denen - sofern zwei um parallele Rotationsachsen rotierende Bearbeitungs-Wellen vorhanden sind - je eine auf einer dieser beiden Wellen im Abstreif-Abschnitt drehfest angeordnet ist, und die beiden Schultern oder Stirnflächen einander axial kontaktieren.

Da die Bearbeitungswellen in aller Regel im Durchlass zwischen den Wellen gleichgerichtete Bewegungsrichtungen am Umfang aufweisen sollen, besitzen sie auch entgegengesetzte Drehrichtungen.

In einer bevorzugten Ausführungsform besitzt zumindest der rotierende Abstreifer, insbesondere auch der die radiale Schulter an der zu reinigenden Scheibe begrenzende Außenumfang, jeweils über den Umfang verteilt ein oder mehrere radiale Einkerbungen, um vor allem fest haftende, harte Verunreinigungen besser ablösen zu können. Dafür ist insbesondere eine der Flanken der Einkerbung wesentlich flacher zur radialen Richtung gestaltet als die andere, vorzugsweise ist die in Drehrichtung vorne liegende vordere Flanke flacher zur radialen Richtung angeordnet als die hintere Flanke.

Vorzugsweise sind die beiden Abstreif-Scheiben identisch ausgebildet, und werden lediglich mit in entgegengesetzte axiale Richtungen weisenden radialen Flächen, also radialen Ringflächen, auf je einer der beiden Wellen befestigt.

Die hier erwähnten radialen Schultern oder radialen Flächen, insbesondere Ringflächen um die Rotationsachse herum, müssen keineswegs im rechten Winkel zur Rotationsachse liegen, sondern können auch konisch gestaltet sein, wobei dann die beiden miteinander axial in Anlage laufenden Flächen entgegengesetzt konisch gestaltet sein müssen.

Ebenso kann eine der beiden Stirnflächen lotrecht zu ihrer Rotationsachse liegen, während die andere Stirnfläche eine rotationsymmetrische, zum Beispiel kegelförmige, zentrische Einkerbung aufweisen kann, sodass diese nur mit ihrer Umfangskante an der gegenüberliegenden Stirnfläche anliegt.

Wenn zwei solche Abstreifer, insbesondere Abstreif-Scheiben, an je einer der beiden Bearbeitungswellen drehfest angeordnet sind, wirkt jede davon als Abstreifer gegenüber der jeweils anderen Scheibe.

Gleichzeitig wird bei der vom Bearbeitungsbereich der Welle weiter entfernten Abstreifscheibe verhindert, dass Verunreinigungen an der dortigen radialen Schulter weiter radial nach außen wandern, und das radial äußere Ende dieser radialen Schulter erreichen und dort - beispielsweise bei Stillstand der Maschine - vor allem flüssige oder pastöse Verunreinigungen schwerkraftbedingt nach unten in Richtung Lagerzapfen der Welle fließen.

Die beiden axial aneinander anliegenden Abstreifscheiben bilden somit eine Art Labyrinth-Dichtung, selbst wenn sie nicht mit ihren Abstreifkanten - der an der anderen Schulter anliegenden Umfangskante - anliegen.

In einer besonders bevorzugten Ausführungsform können nicht rotierende Abstreifer und rotierende Abstreifer auch kombiniert werden, insbesondere wenn durch die Lageranordnung zwei parallel zu einander angeordnete rotierende Bearbeitungswellen gelagert werden:
Einerseits kann im Abstreif-Abschnitt ein nicht-rotierender Abstreifer einerseits radial an einem Umfang und gegebenenfalls zusätzlich axial an einer Schulter, vorzugsweise bei jeder der beiden Wellen, anliegen.

Unabhängig davon, ob der Umfang, an dem der nicht-rotierende, feststehende, Abstreifer anliegt, der Boden einer Umfangsnut ist oder ein axiales Stück der Welle zwischen zwei auf der Welle axial aufgeschobenen Scheiben, können zusätzlich an den Flanken der Nut jeweils rotierende Abstreifer oder Abstreif-Scheiben der jeweils anderen Welle anliegen und mit diesen kämmen, und ebenso auf einer ringförmigen Stirnfläche eines Ringes, in dem eine solche Umfangsnut ausgebildet ist.

Letztendlich können in axialer Richtung beabstandet im Abstreif-Abschnitt jeder der beiden Wellen ein, zwei oder mehr solcher Abstreif-Scheiben angeordnet werden, von denen jede mit einer der Abstreif-Scheiben auf der anderen Welle in Eingriff steht, und axial zwischen mehreren Scheiben auf einer Welle können ein oder mehrere nicht-rotierende, feststehende, Abstreifer an dem Umfang der jeweiligen Welle radial angreifen.

Für eine weitere Optimierung können beim Einsatz rotierender Abstreifer zusätzlich feststehende Abstreifer eingesetzt werden, die jedoch nicht an der Bearbeitungswelle angreifen, sondern an dem rotierenden Abstreifer, insbesondere in dessen radial äußersten Bereich, und dort am Außenumfang und/oder im Außenbereich einer in radialer Richtung abstrebenden Schulter oder Stirnfläche.

Hinsichtlich der Bearbeitungs-Vorrichtung, in der die mindestens eine rotierende Bearbeitungs-Welle eingesetzt wird, wird diese Aufgabe dadurch gelöst, dass die Lageranordnung so ausgebildet ist, wie vorstehend beschrieben.

Vorzugsweise sind bei einer solchen Bearbeitungsvorrichtung an den Bearbeitungs-Wellen in deren Bearbeitungsabschnitt, also deren mittleren Bereich, in dem sie mit den zu bearbeitenden Objekten im Eingriff stehen, ebenfalls nicht-rotierende Abstreifer eingesetzt.

Dann ist der wenigstens eine im Abstreif-Abschnitt eingesetzte feststehende, nicht rotierende, Abstreifer vorzugsweise identisch mit den im Bearbeitungsbereich eingesetzten Abstreifern.

Auf diese Art und Weise wird eine während des laufenden Betriebes eventuell in den Abstreif-Abschnitt gelangende flüssige Verunreinigung von dem wenigstens einen Abstreifer abgenommen und tropft ab einer gewissen Menge von diesem nach unten ab.

Vorzugsweise ist deshalb der Raum unterhalb der Abstreif-Vorrichtung groß genug und zur Aufnahme einer größeren Menge von Verunreinigungen gestaltet und insbesondere gut zugänglich für eine Reinigung der Abstreifvorrichtung und weist insbesondere einen Auffangbehälter unter der Abstreifvorrichtung für solche Verunreinigungen auf.

Insbesondere durch die Vorspannung der Abstreifer in Anlagerichtung gegen die zu reinigenden Flächen ist sichergestellt, dass nach einer Stillstandszeit und einem Auskristallisieren des Zuckers aus der Flüssigkeit dieser sehr stark anhaftende Zucker durch die Abstreifkanten zuverlässig gelöst und vom Ort seiner Anhaftung entfernt werden kann.

Ein Schleudereffekt des rotierenden Abstreifers ist dabei weder möglich, da die Drehzahl bei einem Mitrotieren mit den Bearbeitungswellen hierfür zu gering ist, und darüber hinaus auch nicht wünschenswert, da hierdurch die Verunreinigungen in alle radialen Richtungen abgeworfen werden würden. Deshalb wird auch bei rotierenden Abstreifern die Drehzahl des rotierenden Abstreifers unter 100 Umdrehungen/min gehalten.

Für die Bearbeitungsvorrichtung ist es im Übrigen unerheblich, ob die weiter außen liegende Lagerplatte oder die weiter innen liegende Spritzschutzwand oder keine von beiden Bestandteil des Gehäuses der Bearbeitungsvorrichtung, insbesondere des Zufuhrtrichters für zu bearbeitende Objekte zu dem Bearbeitungsbereich der Walzen, ist, insbesondere welche davon tragender Bestandteil des Gehäuses der Bearbeitungsvorrichtung ist.

### c) Ausführungsbeispiele

Ausführungsformen gemäß der Erfindung sind im Folgenden beispielhaft näher beschrieben. Es zeigen:
- **Figur 1a:**: eine erste Bauform der Lageranordnung in perspektivischer Ansicht,
- **Figur 1b:**: eine perspektivische Ansicht der teilweise demontierten Lageranordnung der Figur 1a mit Blick auf die Abstreifvorrichtung,
- **Figur 2a:**: eine Ansicht in Querrichtung auf die Lageranordnung gemäß Figur 1a,
- **Figur 2b:**: einen Axial-Schnitt entlang der Lagerordnung der Figur 1a,
- **Figur 2c, d:**: vergrößerte, alternative Gestaltungen der Abstreifvorrichtung aus Figur 2b,
- **Figur 3:**: die teilweise demontierte Lageranordnung aus Figur 1b betrachtet in axialer Richtung,
- **Figur 4a:**: eine perspektivische Ansicht auf eine teilweise demontierte zweite Bauform der Lageranordnung,
- **Figur 4b:**: die teilweise demontierte Lageranordnung aus Figur 4a betrachtet in axialer Richtung,
- **Figur 5a:**: einen Axial-Schnitt durch die zweite Bauform der Lageranordnung,
- **Figur 5b:**: eine Ansicht in Querrichtung auf die Lageranordnung gemäß Figur 5a,
- **Figur 6a:**: einen Längsschnitt durch eine zu Figur 5a alternative Ausführung der zweiten Bauform der Lageranordnung,
- **Figur 6b:**: einen Längsschnitt durch eine zu Figur 5a und 6a alternative Ausführung der zweiten Bauform der Lageranordnung,
- **Figur 7:**: einen Axial-Schnitt durch eine Bearbeitungsvorrichtung,
- **Figur 8a:**: einen Axial-Schnitt entlang einer dritten Bauform der Lagerordnung,
- **Figur 8b:**: die teilweise demontierte Lageranordnung aus Figur 8a betrachtet in axialer Richtung.

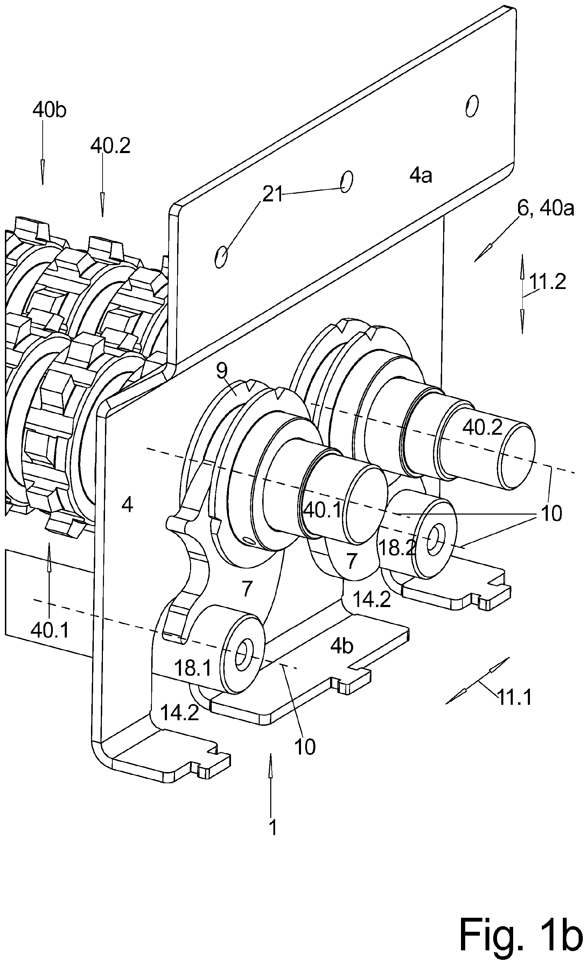

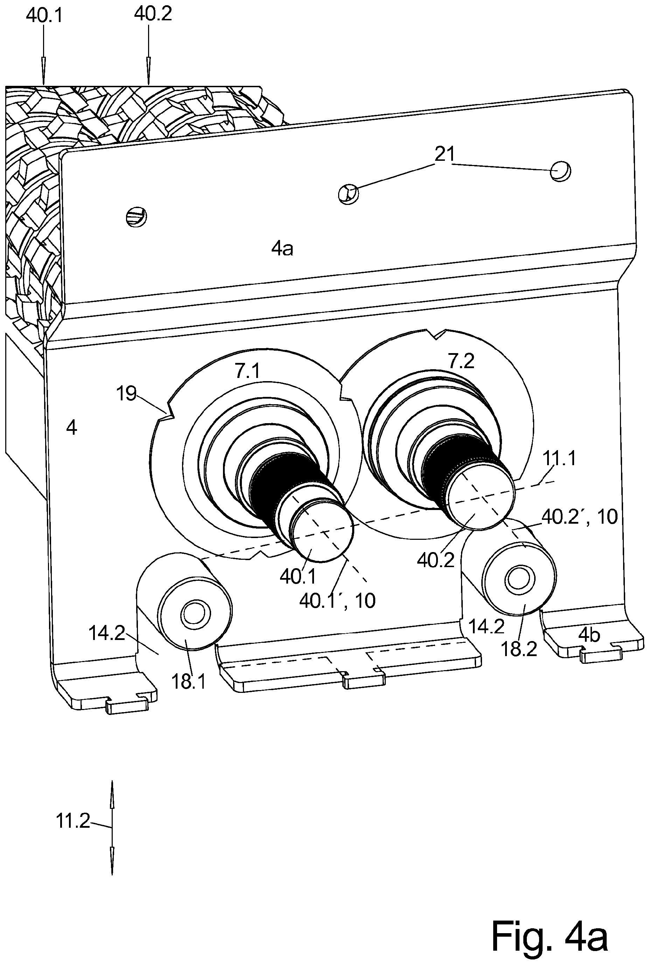

In allen Figuren ist die Lageranordnung 1 dargestellt anhand der Lagerung von zwei parallel im Abstand nebeneinander um eine axiale Richtung 10 rotierende Bearbeitungs-Wellen 40.1, 40.2, im Folgenden kurz Wellen genannt, die - wie beispielsweise die **Figuren 1b** **und** **4a** zeigen - in ihrem Bearbeitungsabschnitt 40b, also zwischen ihren beiden endseitigen Lageranordnungen 1, axial beabstandet Bereiche größeren und kleineren Außendurchmessers aufweisen - was jedoch für die vorliegende Erfindung unerheblich ist - und zusätzlich die Bereiche mit größerem Außendurchmesser in Umfangsrichtung gezahnt ausgebildet sind, wobei die beiden Wellen 40.1, 40.2 so angeordnet sind, dass sie mit Ihren Bereichen größeren und kleineren Durchmessers miteinander kämmen.

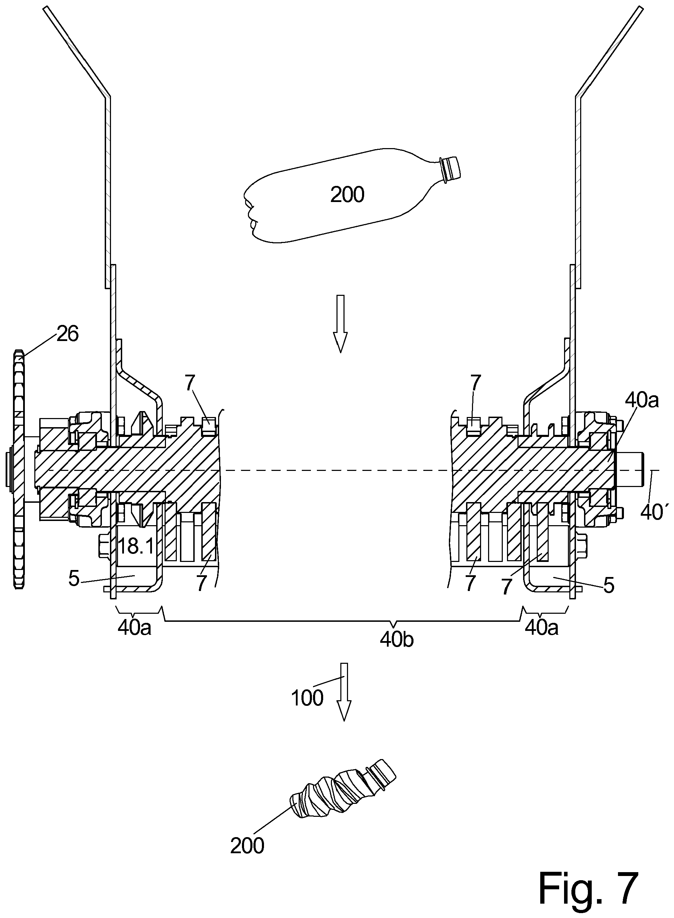

Dadurch können zwischen den beiden gegeneinander laufenden Wellen 40.1, 40.2 Objekte 200 - wie für eine Bearbeitungsvorrichtung 100 in **Figur 7** dargestellt - zwischen den beiden Wellen 40.1, 40.2 hindurchgezogen werden, die dadurch von den beiden Wellen 40.1, 40.2 zumindest zusammengedrückt, meist dabei auch perforiert, werden. Das Hindurchziehen erfolgt in der Regel schwerkraftunterstützt von oben nach unten.

Das Gehäuse der Bearbeitungsvorrichtung 100 weist meist eine an der Oberseite offene Zufuhröffnung 100a zum Zuführen der zu bearbeitenden Objekte 200 auf, sowie am unteren Ende eine Abfuhröffnung 100b für die kompaktierten Objekte 200, wie in **Figur 7** zu erkennen..

Die beiden Wellen 40.1, 40.2 sind an jedem ihrer Enden in einer gemeinsamen Lagerplatte 3 gelagert, auf deren Innenseiten jeweils eine ebenfalls über beide Wellen 40.1, 40.2 durchgehende Spritzschutzwand 4 befestigt ist. Die die beiden Lagerplatten 3, gegebenenfalls diese verbindenden Längsstreben, die beiden Spritzschutzwände 4 sowie die Wellen 40.1 40.2 samt Lagern 2 und die nachfolgend beschriebenen Abstreifvorrichtungen 6 umfassende Wellen-Baugruppe ist mittels z.B. geeigneter Befestigungslaschen gegenüber dem Gehäuse der Bearbeitungsvorrichtung 100 verschraubt und kann als Baugruppe aus der Bearbeitungsvorrichtung 100 nach Demontage entnommen werden

Zusätzlich sind in allen Figuren parallel unterhalb und bezüglich der Mitte zwischen den beiden Wellen 40.1, 40.2 etwas weiter außen angeordnete, in der gleichen Längsrichtung 10, also parallel zu den Wellen 40.1, 40.2, verlaufende Abstreifer-Führungen in Form von Abstreifer-Stangen 18 vorhanden, die einen in diesem Fall runden Außenumfang besitzen.

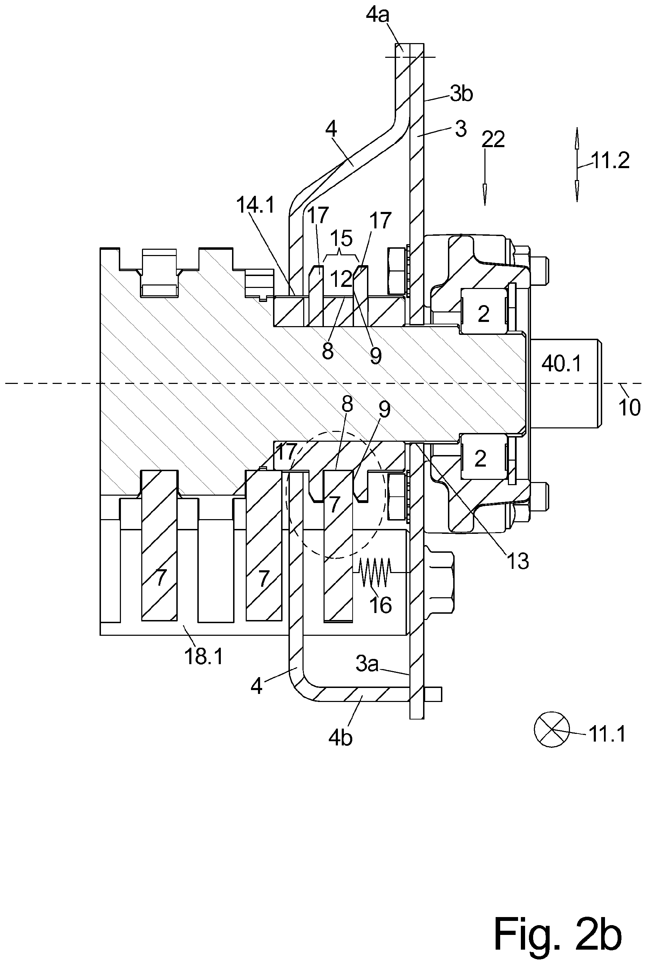

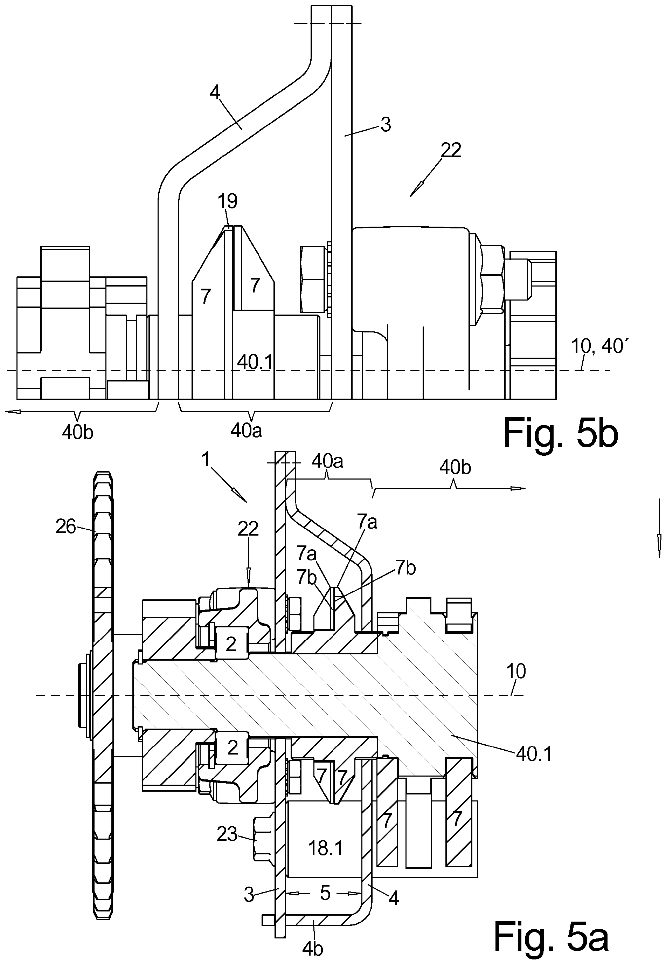

Die insbesondere in den **Figuren 2b** **und** **5a** erkennbaren Abstreifer 7, die im Bearbeitungsabschnitt 40b vorhanden sind, sind formschlüssig zwischen je einer der Abstreiferstangen 18.1 bzw. 18.2 und einem der Abschnitte mit kleinerem Außendurchmesser der benachbarten Welle 40.1 bzw. 40.2 angeordnet.

Diese plattenförmigen Abstreifer 7 besitzen an einander gegenüberliegenden Endbereichen jeweils eine zum Beispiel annähernd halbrunde Ausnehmung, von denen in die eine die Außenkontur der Abstreiferstange 18.1 bzw. 18.2 passt und in die andere der Außenumfang in dem Axialabschnitt der Welle 40.1 bzw. 40.2, an dem der Abstreifer 7 anliegt.

Diese an der Welle 40.1 bzw. 40.2 anliegende Ausnehmung endet mit je einer Abstreifer-Kante 7a, die auf jeden Fall an dem entsprechendem Außenumfang der Welle 40.1, 40.2 anliegt, um dort vorhandene Verunreinigungen 50 zu entfernen, selbst wenn die diesem Außenumfang der Welle 40.1, 40.2 zugewandte Ausnehmung ansonsten größer ist als der dortige Außenumfang der Welle und nicht die gesamte Ausnehmung am Außenumfang der Welle 40.1, 40.2 anliegt.

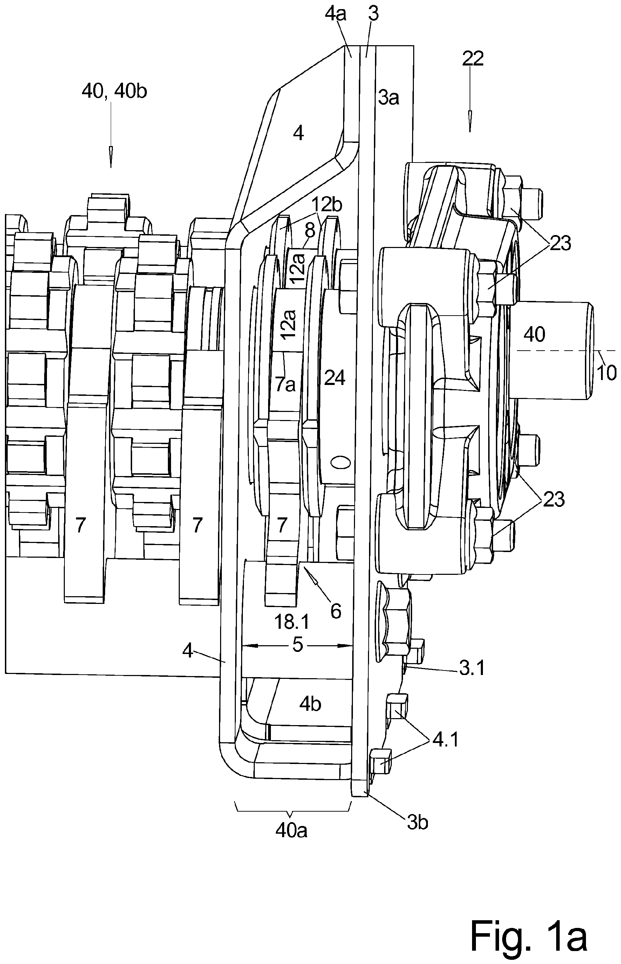

Die **Figuren 1a - 3** zeigen eine erste Bauform der Lageranordnung 1, bei der in einem Abstreifabschnitt 40a, der axial zum Bearbeitungsabschnitt 40b beabstandet ist und sich zwischen dem endseitigen Lager 2 und dem Bearbeitungsabschnitt 40.b der Welle befindet, ein Abstreifer 7 an einem Außenumfang der Welle 40.1 bzw. 40.2 anliegt, der wie die Abstreifer 7 im Bearbeitungsabschnitt 40b nicht rotiert, aber zwischen der Abstreiferstange 18.1 bzw. 18.2 und der benachbarten Welle 40.1 bzw. 40.2 formschlüssig gehalten ist, jedoch in axialer Richtung 10 entlang der ihn tragenden Abstreiferstange 18.1 oder 18.2 verschiebbar und vorzugsweise auch um diese herum etwas verschwenkbar ist.

Von der äußeren Kontur und/oder der Dicke und/oder anderer Faktoren, wie beispielsweise Material, kann der im Abstreifbereich 40a verwendete Abstreifer 7 auch identisch mit den im Bearbeitungsbereich 40b der Wellen 40.1, 40.2 verwendeten Abstreifern 7 sein.

Wie am besten die **Figuren 1a****,** **b** zeigen, ist zwischen dem Bearbeitungsabschnitt 40b und dem Abstreifabschnitt 40a eine Spritzschutzwand 4 angeordnet, durch die die Wellen 40.1, 40.2 hindurch verlaufen, und weiterhin ist zwischen der Abstreifvorrichtung 6, also dem Abstreif-Abschnitt 40a der Wellen 40.1, 40.2, und der dem Lager 2 und dessen Lageraufnahme 22 die Lagerplatte 3 angeordnet, an der die Lageraufnahme 22 für das Lager 2 auf deren Außenseite, also der von der Spritzschutzwand 4 und dem Bearbeitungsabschnitt 40b abgewandten Seite, befestigt ist.

Dadurch liegen zwischen dem Lager 2 und dem Bearbeitungsabschnitt 40b der Wellen 40.1, 40.2 nicht nur die Lagerplatte 3, sondern auch die Spritzschutzwand 4, die beide bereits das Vordringen von Verunreinigungen 50 von dem Bearbeitungsabschnitt 40b zum Lager 2 erschweren und dies weiterhin erschwert wird durch die in dem Abstand 5 zwischen den beiden Platten 3, 4 angeordnete Abstreifvorrichtung 6.

Dieser Abstand 5 ist jedoch in diesem Fall nicht allseitig geschlossen, sondern in der Richtung, in der die beiden Wellen 40.1, 40.2 hintereinander liegen, der ersten Querrichtung 11.1, vorzugsweise jeweils stirnseitig offen, und lediglich auf der Oberseite vollständig und auf der Unterseite teilweise geschlossen.

Wie erkennbar, wird dies erreicht, indem die Spritzschutzwand 4 betrachtet in der ersten Querrichtung 11.1 etwa U-förmig ausgebildet ist und mit ihrer offenen Seite zur Lagerplatte 3 hin weisend befestigt ist. Hierfür besitzt der etwa U-förmige Querschnitt der Spritzschutzwand 4 auf der Oberseite einen etwa in Richtung des verbindenden Schenkels der U-Form verlaufenden Fortsatz, der an die Innenseite der Lagerplatte 3 angelegt und mit dieser mittels dort in diesem Schenkel der Spritzschutzwand 4 vorhandenen Bohrungen 21 gegenüber der Lagerplatte 3 verschraubt werden kann.

Am unteren Ende ist die Spritzschutzwand 4 vorzugsweise formschlüssig an der Lagerplatte 3 befestigt, indem der gegen die Lagerplatte 3 gerichtete untere, frei endende Schenkel des Profils der Spritzschutzwand 4 Fortsätze aufweist, die in nach unten offene Ausnehmungen 3.1 im unteren Ende der Lagerplatte 3 von unten nach oben eingeschoben werden können und aufgrund eines verbreiterten endseitigen Kopfes der Fortsätze 4.1 in diesen formschlüssig in fünf von sechs Raumrichtungen gehalten sind.

Die Lageraufnahme 22 ist - wie am besten in **Figur 2b** zu erkennen - ringförmig gestaltet und wird von vier über den Umfang verteilten Verschraubungen 23 ansonsten auf Abstand zur Außenseite 3a der Lagerplatte 3 gehalten, sodass durch den Abstand dazwischen Verunreinigungen nach unten abfließen können. Die Lageraufnahme 22 besitzt eine nach außen weisende Schulter, an der das von außen eingesteckte Lager 2 angelegt werden kann und in dieser Position durch einen von außen eingebrachten Seegerring gesichert ist.

In der Spritzschutzwand 4 sind ferner nach unten offene Durchlässe 14.1, 14.2 vorhanden, durch welche in deren oberen Ende die Abstreiferstangen 18.1, 18.2 verlaufen, sodass diese - nachdem ihre stirnseitige Verschraubung gegenüber der Lagerplatte 3, an deren Innenseite 3a sie enden - gelöst ist, nach unten aus den Spritzschutzplatten 4 herausgeführt werden können.

Die Durchlässe 13 in der Lagerplatte 3, durch welche sich jeweils eine der Wellen 40.1, 40.2 erstreckt, sind dagegen umlaufend geschlossene Durchlässe, und ebenfalls die Durchlässe 14.1 für den Durchlass jeweils einer Welle in der Spritzschutzwand 4. Beide sind zusätzlich so dimensioniert, dass sie möglichst nah an den Außenumfang der Welle 40.1, 40.2 heranreichen, jedoch ohne diesen zu berühren, und somit eine Art Labyrinth-Dichtung bilden.

Erfindungsgemäß wesentlich ist jedoch die Ausbildung der Abstreifvorrichtung 6, die sich im Zwischenraum 5 zwischen Spritzschutzwand 4 und Lagerplatte 3 befindet:
Dort ist in einem drehfest auf dem Außenumfang der entsprechenden Welle 40.1, 40.2 befestigten Ring 17, wie in **Figur 2b****, untere Hälfte** dargestellt - ersatzweise einstückig direkt im Außenumfang der Welle 40 - eine Ringnut 12 ausgebildet, in welche ein plattenförmiger Abstreifer 7, dessen in axialer Richtung 10 gemessene Breite etwas geringer ist als die Breite der Ringnut 12, in die Ringnut 12 eingreift und - wie zuvor anhand des Bearbeitungsbereiches 40b erläutert - zwischen der Abstreiferstange 18 und der Welle 40.1 bzw. 40.2 gehalten.

Der Ring 17 durchdringt in diesem Fall die Spritzschutzwand 4, endet jedoch vor der Innenseite 3a der Lagerplatte 3.

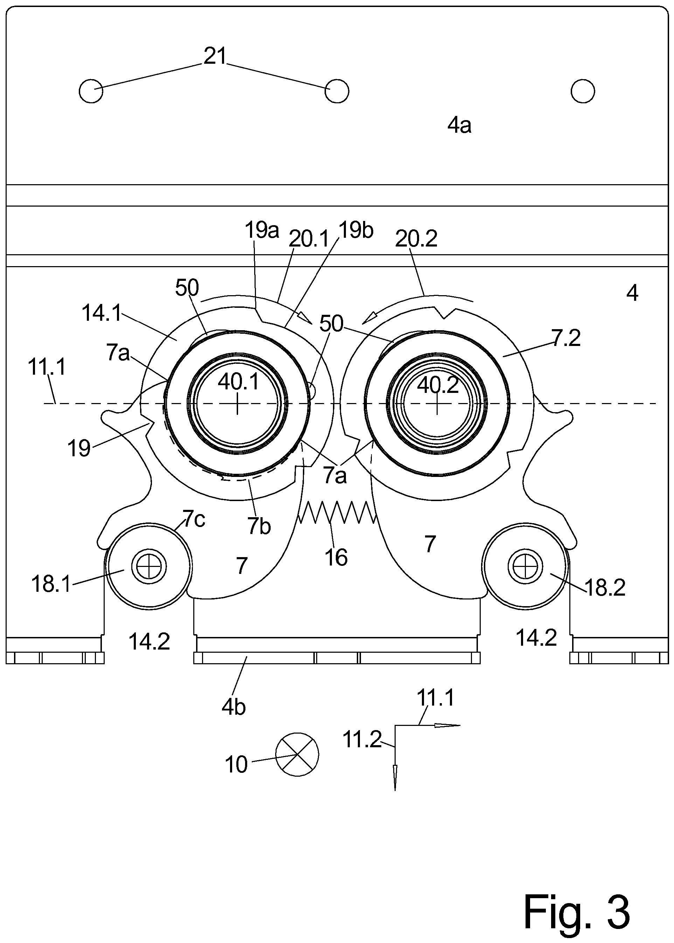

Wie in der axialen Ansicht der **Figur 3** zu erkennen, liegt die Ausnehmung 7b in der Umfangskontur des Abstreifers 7 entweder am Außenumfang der Welle 40.1 bzw. 40.2 an, kann jedoch bereichsweise auch zu diesem im Abstand verlaufen, jedoch soll wenigstens eine der Abstreifkanten 7a, also des vorderen Endes des Abstreif-Fortsatzes, der zwischen der Ausnehmung 7b und dem Rest des Umfangskontur des Abstreifers 7 ausgebildet ist, und von der es somit zwei gibt, entweder am Außenumfang der Welle 40.1, 40.2 anliegen oder am Umfang 8 des Ringes 17, nämlich dem Boden 12a der Ringnut 12, und zwar vorzugsweise diejenige Abstreifkante 7a, die der Drehrichtung 20.1 bzw. 20.2 der Welle 40.1, 40.2 entgegengerichtet ist.

Da gemäß **Figur 3** die Drehrichtungen der beiden Wellen 40.1, 40.2 gegenläufig sind, und zwar so, dass sie im oberen Bereich gegeneinander gerichtet sind, sollen vorzugsweise die zwischen den beiden Wellen 40.1, 40.2 liegenden, hier unteren, Abstreifkanten 7a der beiden Abstreifer 7 an dem Außenumfang des jeweiligen Ringes 17 anliegen, um die gewünschte schabende Wirkung zu besitzen und auf diesem Außenumfang vorhandene Verunreinigungen 50 von der Welle 40.1, 40.2 abzustreifen.

Zu diesem Zweck sind diese beiden Abstreifkanten 7a gegen den Außenumfang der Welle radial vorgespannt, wie in **Figur 3** eingezeichnet beispielsweise mittels einer Druckfeder 16, die zwischen den beiden Abstreifern 7 angeordnet ist und diese voneinander wegdrückt und damit die beiden benachbarten unteren Abstreiferkanten 7a radial gegen den jeweiligen Umfang 8 drückt.

Statt oder ergänzend zu dieser radialen Anlage der Abstreifer 7 an der jeweiligen Welle 40.1, 40.2 ist auch eine axiale Anlage an wenigstens eine radiale Flanke 9, beispielsweise eine der Flanken 12b der Ringnut 12, erwünscht, die in diesem Fall parallel zueinander und lotrecht zur axialen Richtung 10 liegende Ringflächen sind, was jedoch für die Erzielung der gewünschten Reinigungswirkung nicht zwingend notwendig ist.

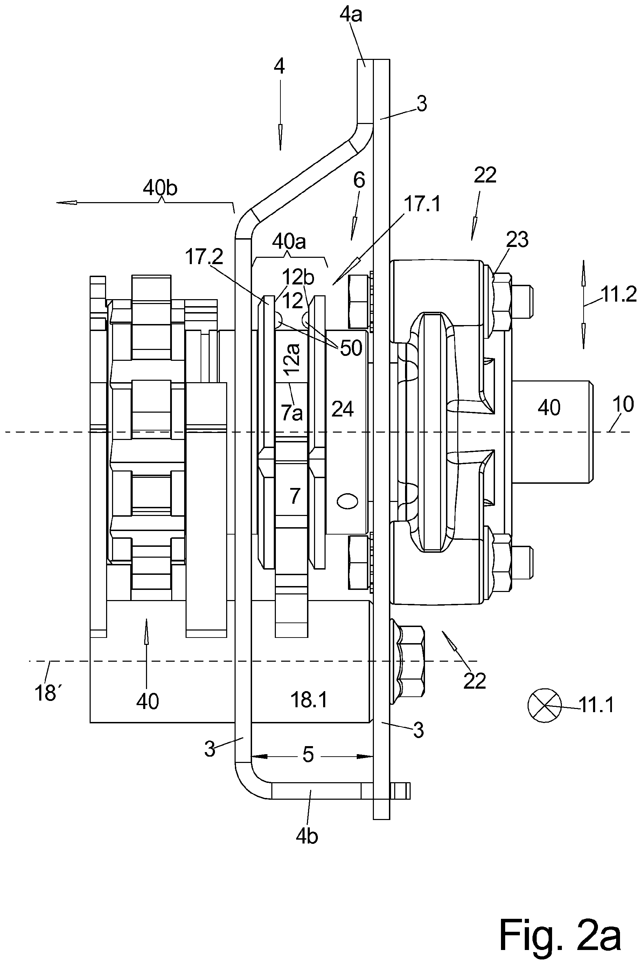

Indem der Abstreifer 7 in axialer Richtung 10 mittels einer Feder 16 vorgespannt ist entweder gegen die eine oder gegen die andere Flanke 12b, liegt die Umfangs-Kante des plattenförmigen Abstreifers 7 an der entsprechenden Schulter 12b an und streift auch von dort Verunreinigungen 50 ab, wie sie beispielhaft nur in **Figur 2a** dargestellt sind.

**Figur 2b** zeigt in der **unteren Hälfte,** dass der Ring 17, in dem die Umfangsnut 12 eingearbeitet ist, einstückig ausgebildet sein kann, oder gemäß der **oberen Hälfte,** dass die Ringnut 12 auch gebildet werden kann durch einzelne, drehfest auf der Welle 40.1 oder 40.2 befestigte Ring-Scheiben 17.1, 17.1, die durch beispielsweise ringförmige Abstandshalter 24 mit geringerem Außendurchmesser auf Abstand gehalten werden, sodass der Abstand 15 zwischen den Scheiben 17 die Ringnut 12 bildet und beispielsweise der Außenumfang des ringförmigen Abstandshalters 24 den Umfang 8 darstellt, an dem der radial angedrückte Abstreifer 7 mit seiner Abstreifkante 7a anliegt.

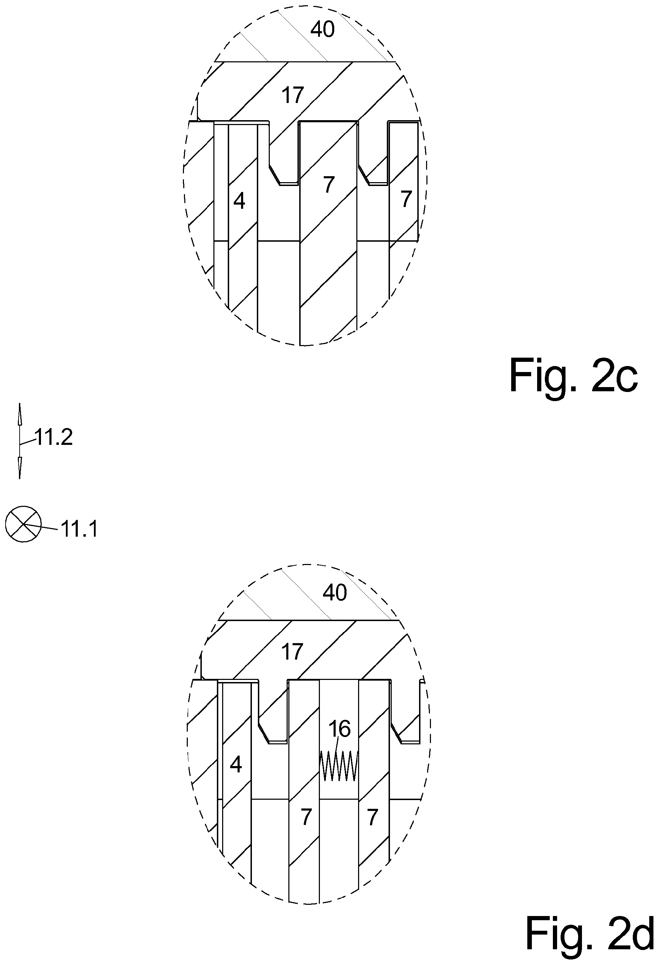

Die vergrößerten Ausschnitte der **Figuren 2c und 2d** aus Figur 2b zeigen alternative Lösungen der Abstreifvorrichtung:
Dabei zeigt **Figur 2c****,** dass anstelle oder zusätzlich zu dem in die Ringnut 12 eintauchenden - stillstehenden oder rotierenden - Abstreifer 7 auch auf der Außenseite einer der beiden Ringnut-Flankenteile, beispielsweise der Scheiben 17, auf der Außenseite anliegend jeweils ein - stillstehender oder rotierender - Abstreifer 7 angeordnet sein kann, der sowohl an dieser Außenseite anliegen kann und/oder auch an dem Umfangsbereich benachbart zu dieser Außenflanke.

**Figur 2d** zeigt eine Lösung, bei der die Ringnut 12 eine solche Breite aufweist, dass axial beabstandet nebeneinander zwei - stillstehende oder rotierende - Abstreifer 7 in die Ringnut 12 hineinragen, und einerseits an jeweils einer der im Wesentlichen radial verlaufenden Flanken 12a, b anliegen und andererseits im Fall eines stillstehenden Abstreifers 7 an deren Nutengrund 12a anliegen.

Dafür sind diese beiden Abstreifer 7 vorzugsweise gegeneinander nach außen gerichtet, insbesondere radial, vorgespannt z.B. mittels einer Feder 16.

Es versteht sich von selbst, dass bei einem nicht exakt radialen Verlauf der entsprechenden Flanken 12b oder der Außenseiten der Flankenteile die in axiale Richtung weisenden Seitenflächen der dort anliegenden Abstreifer 7 analog und parallel zu diesen ausgerichtet sein müssen.

**Figur 3** zeigt ferner, dass im Außenumfang der Flanken-Teile, beispielsweise der Ring-Scheiben 17. 1, 17.2, welche die Nut 12 begrenzen, Einkerbungen 19 vorhanden sein können, die das Ablösen von Verunreinigungen 50, die beispielsweise die Umfangskante des Abstreifers 7 vor sich herschiebt, von diesem erleichtern.

Wie an der rechten Scheibe 17.2 in **Figur 3** dargestellt, können diese Einkerbungen 19 V-förmig und mit der Spitze insbesondere zur Drehachse 40' der jeweiligen Welle 40.1, 40.2 hin gerichtet sein, insbesondere auch symmetrisch hinsichtlich ihrer beiden Flanken ausgebildet sein.

Dagegen ist an der linken Scheibe 17.1 eine Einkerbung 19 dargestellt, bei der die eine Flanke 19a wesentlich steiler zur radialen Richtung verläuft als die andere Flanke 19b, wobei die flachere Flanke 19b in Drehrichtung die vordere Flanke darstellt, sodass die steilere hintere Flanke 19a beim Auftreffen auf eine Verunreinigung 50 schlagartig auftrifft und eine hohe Ablösekraft verursacht.

Die Figuren **4a bis Figur 7** zeigen als zweite Bauform eine Lösung, bei der anstelle eines bezüglich der zu reinigenden, rotierenden Fläche feststehenden Abstreifers ein ebenfalls rotierender Abstreifer 7 verwendet wird.

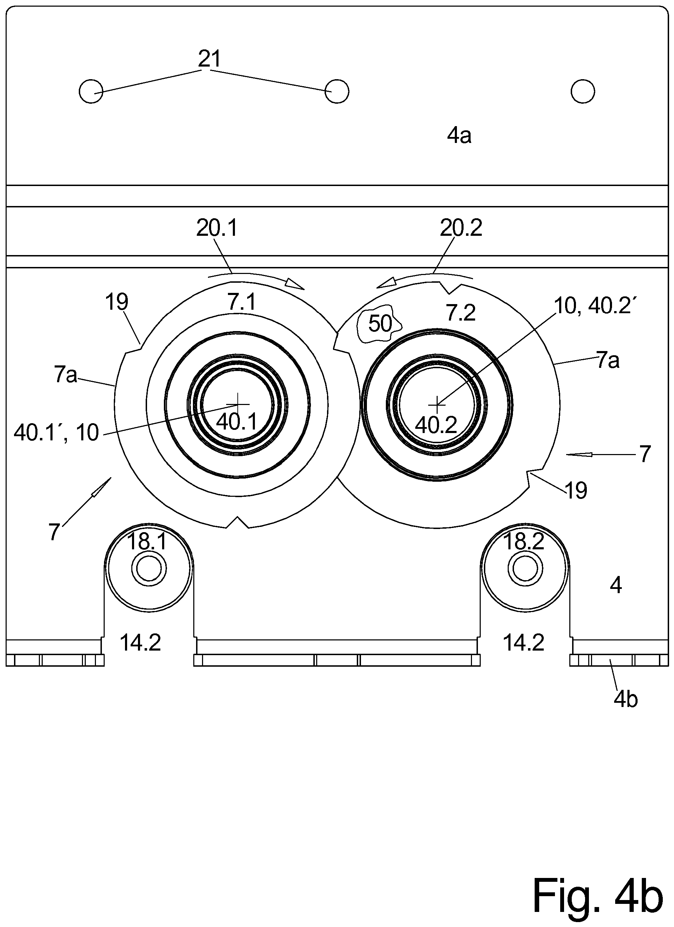

Wie die **Figuren 4a****,** **b** erkennen lassen - bei denen gegenüber der Darstellung der **Figuren 5a****,** b die Lagerplatte 3 sowie das Lager 2 weggelassen sind, um die Abstreifvorrichtung 6 besser erkennen zu können - unterscheidet sich diese Bauform der Abstreifvorrichtung 6 von derjenigen der Figuren 1a - 3 dadurch, dass auf jeder der beiden Wellen 40.1, 40.2 drehfest je eine Abstreif-Scheibe 7.1, 7.2 angeordnet ist, die einen so großen Außendurchmesser besitzen, dass sie in radialer Richtung einander überlappen und die jeweils eine primär radial verlaufende, vorzugsweise exakt radial verlaufende, Anlagefläche 7b besitzen, mit denen sie axial , zumindest mit der Umfangskante dieser Anlagefläche 7b, aneinander anliegen.

Vorzugsweise ist der Außenumfang der Scheiben 7.1, 7.2 jedoch nur so groß, dass sie mit ihrem Außenumfang nicht an der radial gegenüberliegenden Umfangsfläche der benachbarten Welle 40.2 bzw. 40.1 oder eines darauf Dreh fest befestigten zum Beispiel Ringes 17 anliegen, sondern dazwischen eine radiale Lücke 25 verbleibt:
Zusätzlich ist dabei in **Figur 5a** das angetriebene Ende einer Welle 40.1 dargestellt, welches dadurch realisiert ist, dass auf dem Wellenende, das axial über das Lager 2 hinausragt, ein Ritzel 26 drehfest befestigt ist, welches mittels einer nicht dargestellten, darüber geführten, angetriebenen Kette die Welle 40.1 antreiben kann.

Die beschriebenen Abstreifvorrichtungen 6 können jedoch sowohl am angetriebenen als auch am nicht angetriebenen Ende, also der jeweils benachbarten Lageranordnung 1, einer solchen Welle 40.1 angeordnet werden, und unabhängig davon ob es sich bei dem Lager 2 um ein axial festes oder ein axial loses Lager handelt, wobei vor allem bei auf Seiten des axial losen Lagers die axiale Vorspannung des Abstreifers 7 oder der Abstreifscheibe 7.1, 7.2 gegen die zu kontaktierende, primär radial verlaufende, Fläche wichtig ist.

Wie die **Figuren 5a, b** zeigen, besitzen die Abstreifscheiben 7.1, 7.2 einen zum freien Ende hin sich konisch verjüngenden Querschnitt, wobei jedoch die eine Flanke des Querschnittes über die gesamte radiale Erstreckung eben durchgeht, vorzugsweise exakt in radialer Richtung, und diese eben durchgehende, als Anlagefläche 7b genutzte Flanke des Querschnittes der beiden Abstreifscheiben 7.1, 7.2 einander zugewandt sind und aneinander anliegen, zumindest jedoch die Umfangskante dieser Anlagefläche 7b, die als axial anliegende Abstreifkante 7a wirkt.

Wie am besten die **Figuren 4a****,** **b** erkennen lassen, drehen sich die beiden Abstreifscheiben 7.1, 7.2 - die an ihrem Außenumfang die gleichen Einkerbungen 19 aufweisen können wie anhand der Figuren 1a - 3 beschrieben - mit den Wellen 40.1, 40.2, auf denen sie drehfest befestigt sind, gegenläufig, und zwar so, dass sie im oberen Bereich gegeneinander laufen.

Dadurch streift jede der beiden axial anliegenden Abstreifkanten 7a - in diesem Fall der Außenumfang, der vorzugsweise auch eine axiale Erstreckung aufweist - wie in **Figur 5a, b** dargestellt - die jedoch auch schneidenförmig ausgebildet sein könnte, von der Anlagefläche 7b Verunreinigungen 50 ab, und transportiert sie durch die Lücke 25 in den Bereich unterhalb der Höhenlage der Wellen-Achsen 40', wo sie vorzugsweise schwerkraftbedingt von der Abstreifkante 7a herabfallen oder zumindest an der Anlagefläche 7b in deren radial inneren Bereich verbleiben, jedoch nicht den radialen Außenumfang der jeweiligen Abstreifscheibe 7.1, 7.2 erreichen oder diesen gar in axialer Richtung 10 überwinden können.

Vorzugsweise ist der untere, gegen die Lagerplatte 3 gerichtete Schenkel der Spritzschutzplatte 4 auch abseits der Ausnehmungen 14.2 nicht durchgehend, sondern durchbrochen, wie in **Figur 4a** gestrichelt eingezeichnet, sodass solche herabfallenden Verunreinigungen 50 vorzugsweise durch diesen Schenkel hindurch nach unten fallen können, sodass sich kaum herabgefallene Verunreinigungen 50 in dem Freiraum zwischen Lagerplatte 3 und Spritzschutzwand 4 ansammeln können.

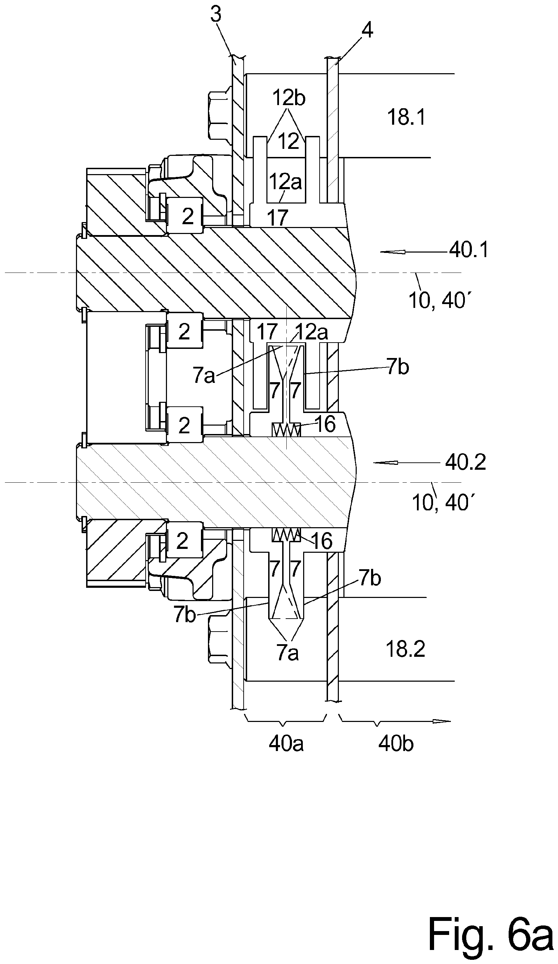

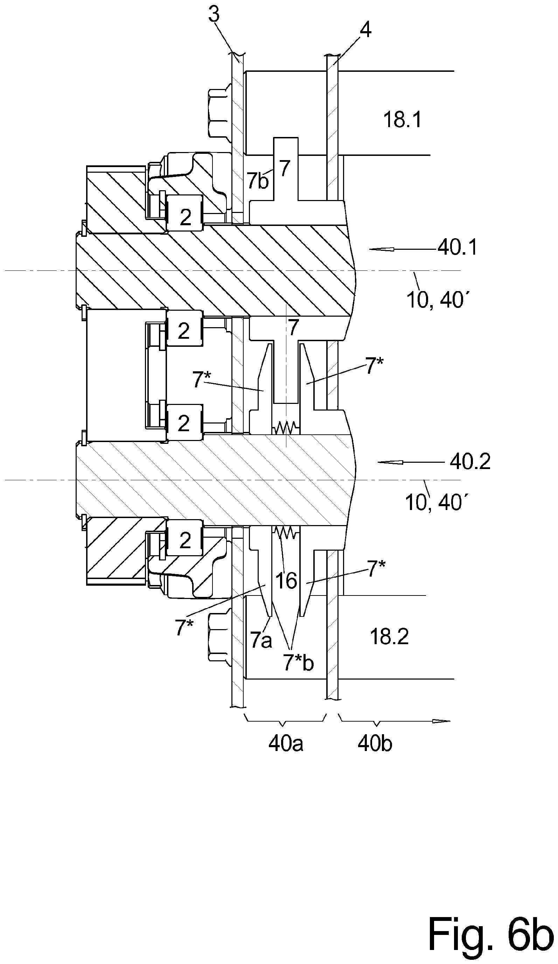

Die **Figuren 6a** **und** **6b** zeigen - in der Aufsicht von oben auf die beiden nebeneinander angeordneten Wellen 40.1, 40.2 - zwei verschiedene weitere Varianten der Abstreifvorrichtung gemäß Figur 5a:
**Figur 6a** zeigt im Abstreifabschnitt 40a auf der einen Welle 40.1 einen drehfest montierten Ring 17 mit darin eingearbeiteter Ringnut 12, analog den Figuren 1a - 3.

Auf der anderen Welle 40.2 sind dagegen zwei Abstreifscheiben 7.1, 7.2 montiert, von denen jede mit ihrer insbesondere radial verlaufenden, ringförmigen Anlagefläche 7b an einer der Flanken 12b der Ringnut 12 anliegt.

Zusätzlich kann eine der Abstreifscheiben 7.1, 7.2 eine in axialer Richtung 10 sehr breit ausgebildete Außenumfangsfläche als radial anliegende Abstreifkante 7a aufweisen, mit der sie radial an dem Boden 12a der Nut 12 anliegt.

Vorzugsweise sind die beiden Abstreifscheiben 7.1, 7.2 z.B. mittels einer Feder 16 in axialer Richtung 10 voneinander weg vorgespannt und damit in Richtung Anlage an den beiden Nutflanken 12b vorgespannt.

**Figur 6b** zeigt die demgegenüber umgekehrte Lösung, indem auf einer der Wellen 40.1 eine Abstreifscheibe 7 drehfest befestigt ist und mitdreht, die zwei vorzugsweise radial verlaufende, ringförmige Anlageflächen 7b aufweist.

An der anderen Welle 40.2 sind in diesem Abstreifabschnitt 4a zwei Abstreifscheiben 7* drehfest, in axialer Richtung 10 jedoch beweglich entlang dieser Welle 40.2 montiert. Jede dieser beiden Abstreifscheiben 7* besitzt eine vorzugsweise radial verlaufende ringförmige Anlagefläche 7*b, mit der sie an der analog ausgerichteten, insbesondere radial verlaufenden, Anlagefläche 7b der Abstreifscheibe 7 der anderen Welle 40.1 anliegt.

Dabei ist auch hier vorzugsweise eine Vorspannung dieser beiden axial zueinander beabstandeten Abstreifscheiben 7* der einen Welle 40.2 gegenüber den äußeren Stirnflächen der Abstreifscheibe 7 der anderen Welle 40.1 gegeben, vorzugsweise mittels einer zwischen diesen beiden axial beabstandeten Abstreifscheiben 7* angeordneten Zugfeder 16.

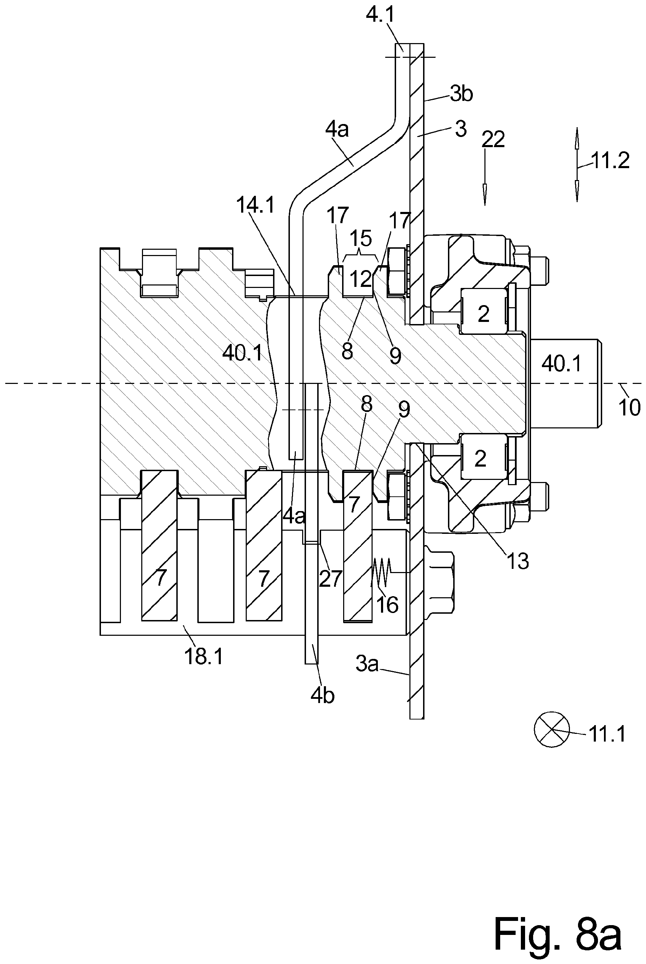

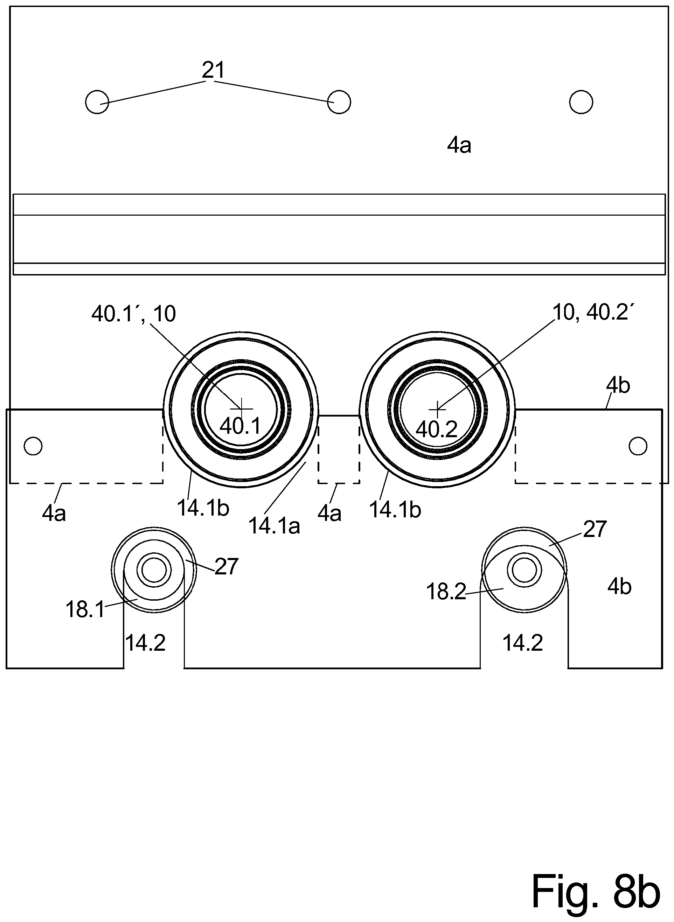

"Die **Figuren 8a****,** **b** zeigen eine von den Figuren 1 - 3 dahingehend abweichende dritte Bauform, dass in den **Figuren 8a****,** **b** die Spritzschutzwand 4 zweiteilig ausgebildet ist, bestehend aus dem oberen Wand-Teil 4a und dem damit verschraubten und in der Vertikalen deshalb damit teilweise überlappenden unteren Wand-Teil 4b. Der untere Wand-Teil 4b ist dabei auf der vom Bearbeitung-Abschnitt der Wellen 40.1, 40.2, also die mittleren Bereich der Wellen in deren axialer Richtung, abgewandten Seite des oberen Wand-Teiles 4a angeordnet, sodass von deren Unterkante nach unten abtropfende Flüssigkeit von dem weiter außen liegenden unteren Wand-Teil 4b weiter nach unten abgeleitet wird.

Dabei ist der untere Wand-Teil 4b vorzugsweise nur an dem oberen Wand-Teil 4a befestigt, der wie in den **Figuren 1 - 3** gekröpft ausgebildet ist und mit dem oberen Befestigungsfortsatz 4.1 an der Lagerplatte 3 befestigt ist, jedoch nicht mit seinem unteren Ende ebenfalls an der Lagerplatte 3 befestigt, sondern läuft nach unten frei aus, insbesondere vertikal, so dass es sich bei dem unteren Teil 4b vorzugsweise um eine ebene Platte handelt.

Wie **Figur 8b** zeigt, sind im unteren Bereich des oberen Wand-Teiles 4a nach unten offene Durchlässe 14.1a zur Aufnahme je einer der Bearbeitungs-Wellen 40.1, 40.2 aufgenommen. Das obere Ende dieser Durchlässe 14.1a ist etwa halbrund ausgebildet und dimensioniert entsprechend dem Durchmesser der Bearbeitungs-Wellen 40.1, 40.2 an dieser Axialposition, an den sie möglichst nah heranreichen, aber zur Vermeidung von Reibung nicht an diesem anliegen sollten.

Von den Enden dieser halbrunden Kontur erstrecken sich die Flanken der Durchlässe 14.1a nicht verengend, sondern parallel oder sich voneinander entfernend weiter nach unten.

Umgekehrt weist der untere Wand-Teil 4b im oberen Bereich analoge nach oben offene Durchlässe 14.1b zur Aufnahme je einer der Bearbeitungs-Wellen 40.1, 40.2 auf. Das untere Ende dieser Durchlässe 14.1b ist wiederum etwa halbrund ausgebildet und dimensioniert entsprechend dem Durchmesser der Bearbeitungs-Wellen 40.1,40.2 an dieser Axialposition, an die sie möglichst nah heranreichen, aber zur Vermeidung von Reibung nicht an diesen anliegen sollten.

Von den Enden dieser halbrunden Kontur erstrecken sich die Flanken der Durchlässe 14.1b wiederum nicht verengend, sondern parallel oder sich voneinander entfernend weiter nach oben.

Im vertikalen Überlappungsbereich der beiden Wandteile 4a, b sind diese, wie am besten in **Figur 8a** erkennbar, gegeneinander verschraubt.

Zusätzlich sind im unteren Bereich des unteren Wand-Teiles 4b die bereits anhand einer einteiligen Spritzschutzwand 4 beschriebenen, nach unten offenen, Durchlässe 14.2 zur Aufnahme je einer der Abstreifer-Stangen 18 vorhanden.

Das obere Ende dieser Durchlässe 14.2 ist an die obere Hälfte der Umfangskontur dieser Abstreifer-Stangen 18 an dieser Axialposition angepasst und in diesem Fall etwa halbrund ausgebildet und dimensioniert entsprechend dem Durchmesser der Abstreifer-Stangen 18 an dieser Axialposition, an die sie möglichst nah heranreichen oder sogar anliegen sollten, da sich die Abstreifer-Stangen 18 ja nicht drehen.

Wie **Figur 8b** in der linken Hälfte zeigt, besitzt die Abstreiferstange 18.1 eine umlaufende Nut 27 mit einer Breite entsprechend dem unteren Teil 4b, in welche der untere Teil 4b eingreift und dadurch in axialer Richtung stabilisiert ist.

Die Nut 27 kann sich jedoch auch nur im oberen Bereich des Umfanges der Abstreifer-Stange 18 befinden, wie in der rechten Hälfte der **Figur 8b** an der Abstreifer-Stange 18.2 dargestellt.

Diese Ausbildung erleichtert einerseits die Montage, da zunächst die Bearbeitungs-Wellen 40.1, 40.2 zwischen den Lagerplatten 3 montiert werden können, danach die beiden Wand-Teile 4a, b von oben bzw. unten an die Bearbeitungs-Wellen 40.1, 40.2 heran geschoben und gegeneinander oder gegenüber der Lagerplatte 3 verschraubt werden können. Anschließend werden die Abstreifer-Stangen 18 von unten in die nach unten offenen Durchlässe 14.2 eingeschoben und gegenüber den Lagerplatten 3 verschraubt.

Der Hauptvorteil besteht jedoch darin, dass die Spritzschutzwand 4 nun den Umfang der Bearbeitungs-Wellen 40.1, 40.2 an dieser Stelle voll umfänglich eng umgibt und ebenfalls als Abstreifer bzw. Labyrinth-Dichtung gegen das Vordringen von Flüssigkeit entlang der Bearbeitungswellen 40.1 in Richtung der außen liegenden Lager 2 dient.

Die **Figur 8a** zeigt zusätzlich - was jedoch unabhängig von der zweiteiligen Ausbildung der Spritzschutzwand 4 ist - dass hier die mit den Bearbeitungs-Wellen 40.1, 40.2 im Abstreif-Abschnitt 40a vorhandenen, mitrotierenden Abstreifer-Scheiben 7 einstückig zusammen mit der jeweiligen Bearbeitungs-Welle 40.1, 40.2 ausgebildet sind.

Dadurch kann der axiale Längenbedarf des Abstreif-Abschnittes 40a reduziert werden, so dass die axiale Erstreckung des Bearbeitungs-Abschnittes 40b dadurch vergrößert wird."

### BEZUGSZEICHENLISTE

- 1: Lageranordnung
- 2: Lager
- 3: Lagerplatte
- 3.1: Ausnehmung
- 3a: Außenseite
- 3b: Innenseite
- 4: Spritzschutzwand
- 4.1: Fortsatz
- 5: Abstand, Zwischenraum
- 6: Abstreif-Vorrichtung
- 7, 7*, 7.1, 7.2: Abstreifer, Abstreifscheibe
- 7': Anlagerichtung
- 7a: Abstreifkante
- 7b: (radiale) Anlagefläche
- 8: Umfang
- 9: radiale Schulter
- 10: axiale Richtung
- 11: Querrichtung, radiale Richtung
- 12: Umfangsnut
- 12a: Boden
- 12b: Seitenflanke
- 13: Durchlass
- 14: Durchlass
- 15: Abstand
- 16: Feder
- 17: Ring, Ring-Scheibe
- 18, 18.1,18.2: Abstreifer-Führung, Abstreifer-Stange
- 18': Führung-Richtung
- 19: Einkerbung
- 19a, b: Flanke
- 20.1,20.2: Drehrichtung
- 21: Bohrung
- 22: Lager-Aufnahme
- 22 a, b: Aufnahme-Teil
- 23: Verschraubung
- 24: Abstandshalter
- 25: Lücke
- 26: Ritzel
- 27: Nut

- 40, 40.1, 40.2: Bearbeitungs-Welle, Welle
- 40': Rotationsachse
- 40a: Abstreif-Abschnitt
- 40b: Bearbeitungs-Abschnitt

- 50: Verunreinigung

- 100: Bearbeitungs-Vorrichtung
- 100a: Zufuhröffnung
- 100b: Abfuhröffnung
- 101: Gehäuse

- 200: Objekt

## Patentansprüche

1. **Lageranordnung** (1) einer um eine Rotationsachse (40') rotierende, Bearbeitungs-Welle (40) einer Bearbeitungs-Vorrichtung,
1b) insbesondere Kompaktierungs- und/oder Perforierungs- und/oder Trenn-Vorrichtung, für zu bearbeitenden Objekte (200), mit
1c) einem axial festen oder axial losen Wellen-Lager (2)
1d) einer Lagerplatte (3), auf deren Außenseite (3a) das Wellen-Lager (2) direkt oder mit Abstand befestigt ist,
1e) einer auf der Innenseite (3b) der Lagerplatte (3) und im Abstand (5) zur Lagerplatte (3) angeordneten Spritzschutzwand (4),1f) wobei die Lagerplatte (3) und die Spritzschutzwand (4) je einen Durchlass (13, 14) für jede Bearbeitung-Welle (40) aufweisen,
wobei
1g) im Abstand (5) zwischen Lagerplatte (3) und Spritzschutzwand (4) eine Abstreif-Vorrichtung (6) mit einem plattenförmigen Abstreifer (7) angeordnet ist zum Abstreifen von Verunreinigungen (50) von dem den Abstand (5) durchlaufenden Abstreif-Abschnitt (40a) der Bearbeitungs-Welle (40),
1h) **dadurch gekennzeichnet, dass** der Abstreifer (7) mit einer Abstreiftkante als vorderem, spitzwinkligem Ende eines Abstreif-Fortsatzes an dem Abstreif-Abschnitt (40a) der Bearbeitungs-Welle oder einem auf der Bearbeitungs-Welle (40) drehfest befestigten Wellen-Teil wie etwa einem Ring (17) anliegt.

2. Lageranordnung nach Anspruch 1,
**dadurch gekennzeichnet, dass** der Abstreifer (7) in Querrichtung (11) der Welle (40) ortsfest angeordnet ist und mit einer Abstreifkante (7a) an dem Abstreif-Abschnitt (40a) direkt oder dem auf der Welle drehfest befestigten Wellen-Teil anliegt, insbesondere radial an einem Umfang (8) und/oder axial an einer radialen Schulter (9) des Abstreif-Abschnittes (40a) direkt oder indirekt anliegt.

3. Lageranordnung nach einem der vorhergehenden Ansprüche,
**dadurch gekennzeichnet, dass**
- der Umfang (8) der Boden (12a) einer Umfangsnut (12) ist,
und/oder
- die radialen Schulter (9) eine Seitenflanke (12b) einer Umfangsnut (12) ist, und der Abstreifer (7) vorzugsweise nur an einer der Seitenflanken (12b) anliegt.

4. Lageranordnung nach einem der vorhergehenden Ansprüche,
**dadurch gekennzeichnet, dass**
der Abstreifer (7) in axialer Richtung (10) beweglich direkt oder indirekt an der Lagerplatte (3) und/oder der Spritzschutzwand (4) befestigt ist, insbesondere an einer Abstreifer-Führung (18), die insbesondere an der Lagerplatte (3) befestigt ist, und/oder
die Abstreifkante (7a) unterhalb der Mitte des Umfanges (8) an dem Abstreif-Abschnitt (40a) oder dem auf der Welle drehfest befestigten Wellen-Teil anliegt.

5. Lageranordnung nach einem der vorhergehenden Ansprüche,
**dadurch gekennzeichnet, dass**
der Abstreifer (7) in radialer und/oder axialer Anlagerichtung in Richtung des Abstreif-Abschnittes (40a) oder dem auf der Welle drehfest befestigten Wellen-Teil vorgespannt ist, insbesondere mittels einer Feder (16).

6. Lageranordnung nach einem der vorhergehenden Ansprüche,
**dadurch gekennzeichnet, dass**
- der Abstreifer (7) ein um eine parallel und beabstandet zur Rotationsachse (40') der Welle (40) angeordnete Rotationsachse (7') rotierender Abstreifer (7) ist, der an einer radialen Schulter (9) des Abstreif-Abschnittes (40a) oder dem auf der Welle drehfest befestigten Wellen-Teil axial anliegt und
- insbesondere der rotierende Abstreifer (7) und der Abstreif-Abschnitt (40a) gegenläufig rotieren.

7. Lageranordnung nach einem der vorhergehenden Ansprüche,
**dadurch gekennzeichnet, dass**
der rotierende Abstreifer (7) eine Abstreif-Scheibe (7) mit einer etwa radial gerichteten, insbesondere radialen, Anlagefläche (7b) ist, insbesondere der rotierende Abstreifer (7), insbesondere die Abstreif-Scheibe (7), als separates Bauteil drehfest und in axialer Richtung (10) dicht auf der Welle (40) befestigt ist oder einstückig zusammen mit dieser ausgebildet ist.

8. Lageranordnung nach einem der vorhergehenden Ansprüche,
**dadurch gekennzeichnet, dass**
in der wenigstens einen Abstreifscheibe (7) in ihrem größten Außendurchmesser über den Umfang verteilt mehrere Einkerbungen (19) vorhanden sind.

9. Lageranordnung nach einem der vorhergehenden Ansprüche für eine Bearbeitungsvorrichtung mit zwei parallel angeordneten, gegenläufig rotierenden Wellen (40.1, 40.2),
**dadurch gekennzeichnet, dass**
- der rotierende Abstreifer (7), insbesondere die Abstreif-Scheibe (7), um die Rotationsachse (40.1') der einen Welle (z.B. 40.1) rotiert und vorzugsweise an dieser zumindest drehfest befestigt ist und
- die radiale Schulter (9) am Abstreif-Abschnitt (40a) der anderen Welle (z.B. 40.2) ausgebildet ist.

10. Lageranordnung nach einem der vorhergehenden Ansprüche, **dadurch gekennzeichnet, dass**
die an einer Abstreif-Scheibe (7.1) anliegende radiale Schulter (9) oder ringförmige Stirnfläche durch eine Seitenflanke (12b) einer Umfangsnut (12) ausgebildet ist, und/oder
die an einer Abstreif-Scheibe (7.1) anliegende radiale Schulter (9) oder ringförmige Stirnfläche an einer weiteren Abstreif-Scheibe (7.2) ausgebildet ist und/oder die beiden Abstreif-Scheiben (7.1, 7.2) identisch ausgebildet sind und die eine radiale Schulter (9) die Anlage-Fläche (7b) der weiteren Abstreif-Scheibe (7.2) ist, und/oder

11. Lageranordnung nach einem der vorhergehenden Ansprüche,
**dadurch gekennzeichnet, dass**
die Umfangsnut (12)
- entweder im Außenumfang eines auf dem Abstreif-Abschnitt (40a) aufgesteckten und zumindest drehfest, und insbesondere in axialer Richtung dicht, fixierten, im Abstand (5) untergebrachten, Wellenteiles, insbesondere eines Ringes (17), vorzugsweise eine Ring-Scheibe (17), angeordnet ist
- oder durch den axialen Abstand (15) zwischen zwei solchen Ringen (17) gebildet wird.

12. Lageranordnung nach einem der vorhergehenden Ansprüche,
**dadurch gekennzeichnet, dass**
- an der einen Welle (40.1) ein Ring (17) mit Umfangsnut (12) drehfest angeordnet ist und
- an der anderen Welle (40.2) mindestens eine, besser mehrere, rotierende Abstreifer (7), insbesondere Abstreif-Scheiben (7), drehfest angeordnet sind, die an jeweils einer der Seitenflanke (12b) der Umfangsnut (12) oder einer der stirnseitigen radialen Ringflächen des Ringes (17) anliegen.

13. Lageranordnung nach einem der vorhergehenden Ansprüche,
**dadurch gekennzeichnet, dass**
- die Spritzschutzwand (4) aus zwei lösbar miteinander verbundenen, insbesondere verschraubten, Wand-Teilen (4a) und (4b) besteht, die sich in der Vertikalen aneinander anschließen, gegebenenfalls mit einem Überlappungsbereich dazwischen, und die wenigstens eine Bearbeitungswelle (40.1 40.2) umfänglich umschließen, insbesondere
- indem hierfür der obere Wand-Teil (4a) in seinem unteren Bereich einen nach unten offenen Durchlass (14.1a) für jede Bearbeitungswelle 40 aufweist,
und/oder
- indem hierfür der untere Wand-Teil (4b) in seinem oberen Bereich einen nach oben offenen Durchlass (14.1b) für jede Bearbeitungswelle (40) aufweist sowie vorzugsweise in seinem unteren Bereich einen nach unten offenen Durchlass (14.2) für jede Abstreifer-Stange (18).

14. Lageranordnung nach einem der vorhergehenden Ansprüche,
**dadurch gekennzeichnet, dass**
- wenigstens einer der nach unten offenen Durchlässe (14.1a) des oberen Wand-Teiles (4a) und/oder wenigstens einer der nach oben offenen Durchlässe (14.1b) des unteren Wand-Teiles (4b) in einen Umfangsrichtung verlaufenden Nut in der Bearbeitungs-Welle (40.1,40.2) eingreift
und/oder
- wenigstens einer der nach unten offenen Durchlässe (14.2) des unteren Wand-Teiles (4b) in eine Umfangsrichtung verlaufenden Nut (27) in der Abstreifer-Stange (18.1, 18.2) eingreift.

15. **Bearbeitungs-Vorrichtung** (100), insbesondere Kompaktierungs- und/oder Perforierungs- und/oder Trenn-Vorrichtung, mit wenigstens einer in deren Gehäuse drehbar mittels wenigstens einer Lageranordnung (1) gelagerten Bearbeitungs-Welle (40),
**dadurch gekennzeichnet, dass**
- die Lageranordnung (1) der Bearbeitung-Welle (40) gemäß einem der vorhergehenden Ansprüche ausgebildet ist,
- insbesondereder mindestens eine nicht mitdrehende Abstreifer (7) identisch mit im Bearbeitungs-Abschnitt (40b) der wenigstens einen Bearbeitungs-Welle (40.1) vorhandenen Abstreifern (7) ausgebildet ist.

## Claims

1. **Bearing arrangement** (1) of a machining shaft (40) of a machining device rotating about an axis of rotation (40')
1b) in particular a compacting and/or perforating and/or separating device, for objects (200) to be processed, with
1c) an axially fixed or axially loose shaft bearing (2)
1d) a support plate (3), at the outside (3a) of which the shaft bearing (2) is fixed directly or at a distance,
1e) a splash protection wall (4) arranged at the inside (3b) of the support plate (3) and at a distance (5) from the support plate (3) wherein the support plate (3) and the splash protection wall (4) each have a passage (13, 14) for each machining shaft (40),
where
1g) a scraper device (6) with a plate-shaped scraper (7) is arranged within the distance (5) between the support plate (3) and the splash protection wall (4) for scraping off impurities (50) from the scraping section (40a) of the machining shaft (40) passing through the distance (5),
**characterized in that**
1h) the scraper (7) butts with a scraping edge as the front, acute-angled end of a scraper extension against the scraping section (40a) of the machining shaft or a shaft part, such as a ring (17), fixed non-rotatably on the machining shaft (40).

2. Bearing arrangement according to claim 1,
**characterized in that**
the scraper (7) is arranged in a stationary manner in the transverse direction(11) of the shaft (40) and butts with a scraper edge (7a) against the scraping section (40a) directly or against the shaft part fixed non-rotatably on the shaft, in particular butts radially against a circumference (8) and/or axially against a radial shoulder (9) of the scraping section (40a) directly or indirectly.

3. Bearing arrangement according to one of the previous claims, **characterized in that**
- the circumference (8) is the bottom (12a) of a circumferential groove (12),
and/or
- the radial shoulder (9) is a side flank (12b) of a circumferential groove (12), and the scraper (7) preferably bears against only one of the side flanks (12b).

4. Bearing arrangement according to one of the previous claims,
**characterized in that**
the scraper (7) is fastened directly or indirectly to the support plate (3) and/or the splash protection wall (4) so as to be movable in the axial direction (10), in particular to a scraper guidance (18), which is fastened in particular to the support plate (3),
and/or
the scraper edge (7a) below the centre of the circumference (8) abuts the scraping section (40a) or the shaft part fixed non-rotatably on the shaft.

5. Bearing arrangement according to one of the previous claims,
**characterized in that**
the scraper (7) is pretensioned in the radial and/or axial contact direction in the direction of the scraping section (40a) or the shaft part fixed non-rotatably on the shaft, in particular by means of a spring (16).

6. Bearing arrangement according to one of the previous claims,
**characterized in that**
- the scraper (7) is a scraper (7) rotating about an axis of rotation (7') arranged parallel to and spaced apart from the axis of rotation (40') of the shaft (40), the scraper (7) butting axially against a radial shoulder (9) of the scraping section (40a) or the shaft part fixed non-rotatably on the shaft, and
- in particular the rotating scraper (7) and the scraping section (40a) rotate in opposite directions.

7. Bearing arrangement according to one of the previous claims,
**characterized in that**
the rotating scraper (7) is a scraper disc (7) with an approximately radially directed, in particular radial, contact surface (7b), in particular the rotating scraper (7), in particular the scraper disc (7), is fixed as a separate component in a rotationally fixed manner and tightly in the axial direction (10) on the shaft (40) or is formed in one piece together with the latter.

8. Bearing arrangement according to one of the previous claims,
**characterized in that**
in which at least one scraper disc (7) has several notches (19) distributed over the circumference of its largest outer diameter.

9. Bearing arrangement according to one of the preceding claims for a machining device with two parallel, counter-rotating shafts (40.1, 40.2),
**characterized in that**
- the rotating scraper (7), in particular the scraper disc (7), rotates about the axis of rotation (40.1') of the one shaft (e.g. 40.1) and is preferably at least non-rotatably fixed to the latter, and
- the radial shoulder (9) is formed on the scraping section (40a) of the other shaft (e.g. 40.2).

10. Bearing arrangement according to one of the previous claims,
**characterized in that**
the radial shoulder (9) or annular end face butting against a scraper disc (7.1) is formed by a side flank (12b) of a circumferential groove (12), and/or
the radial shoulder (9) or annular end face butting against one scraper disc (7.1) is formed on a further scraper disc (7.2) and/or the two scraper discs (7.1, 7.2) are formed identically and the one radial shoulder (9) is the contact surface (7b) of the further scraper disc (7.2).

11. Bearing arrangement according to one of the previous claims,
**characterized in that**
the circumferential groove (12)
- is arranged either in the outer circumference of a shaft part, in particular a ring (17), preferably a ring-disc (17), which is mounted on the scraping section (40a) and is fixed at least in a rotationally fixed manner within the distance (5), in particular tight in the axial direction,
- or consists of the axial distance (15) between two such rings (17).

12. Bearing arrangement according to one of the previous claims,
**characterized in that**
- a ring (17) with a circumferential groove (12) is non-rotatably arranged on one shaft (40.1) and
- on the other shaft (40.2) at least one, preferably several, rotating scrapers (7), in particular scraper discs (7), are arranged in a rotationally fixed manner, which butts in each case against one of the side flanks (12b) of the circumferential groove (12) or against one of the end radial ring faces of the ring (17).

13. Bearing arrangement according to one of the previous claims,
**characterized in that**
- the splash protection wall (4) consists of two wall parts (4a) and (4b) which are detachably connected to one another, in particular screwed together, and which adjoin one another vertically, possibly with an overlap region in between, and which circumferentially enclose at least one machining shaft (40.1 40.2),
in particular
- for which purpose the upper wall part (4a) has in its lower region a downwardly open passage (14.1a) for each machining shaft 40,
and/or
- in which for this purpose the lower wall part (4b) has in its upper region an upwardly open passage (14.1b) for each machining shaft (40) and preferably in its lower region a downwardly open passage (14.2) for each stripper rod (18).

14. Bearing arrangement according to one of the previous claims,
**characterized in that**
- at least one of the downwardly open passages (14.1a) of the upper wall part (4a) and/or at least one of the upwardly open passages (14.1b) of the lower wall part (4b) engages in a groove in the machining shaft (40.1, 40.2) extending in a circumferential direction
and/or
- at least one of the downwardly open passages (14.2) of the lower wall part (4b) engages in a groove (27) running in a circumferential direction in the scraper rod (18.1, 18.2).

15. **Machining device** (100), in particular compacting and/or perforating and/or separating device, with at least one machining shaft (40) rotatably mounted in its housing by means of at least one bearing arrangement (1),
**characterized in that**
- the bearing arrangement (1) of the machining shaft (40) is formed according to one of the previous claims,
- in particular at least one non-rotating scraper (7) is identical to the scrapers (7) arranged in the machining section (40b) of the at least one machining shaft (40.1).

## Revendications

1. **Dispositif de palier** (1) d'un arbre de traitement (40) d'un dispositif de traitement tournant autour d'un axe de rotation (40')
1b) en particulier un dispositif de compactage et/ou de perforation et/ou de séparation, pour les objets à traiter (200), avec
1c) un palier d'arbre axialement fixe ou axialement libre (2),
1d) une plaque de palier (3), sur la face extérieure (3a) de laquelle est fixé directement ou à distance le palier d'arbre (2),
1e) une paroi de protection contre les giclements (4),1f) disposée sur la face intérieure (3b) de la plaque de palier (3) et à une distance (5) de la plaque de palier (3), dans lequel la plaque de palier (3) et la paroi de protection contre les giclements (4) présentent chacune un passage (13, 14) pour chaque arbre de traitement (40), dans lequel
1g) un dispositif de raclage (6) avec un racleur (7) en forme de plaque est disposé à distance (5) entre la plaque de palier (3) et la paroi de protection contre les giclements (4) pour racler les impuretés (50) de la section de raclage (40a) de l'arbre de traitement (40) traversant la distance (5),
**caractérisé en ce que**
1h) le racleur (7) s'appuie avec un bord de raclage comme extrémité avant à angle aigu d'un prolongement de raclage contre la section de raclage (40a) de l'arbre de traitement ou une partie d'arbre fixée de manière non rotative sur l'arbre de traitement (40), comme par exemple un anneau (17).

2. Dispositif de palier selon la revendication 1,
**caractérisé en ce que**
le racleur (7) est disposé de manière fixe dans la direction transversale (11) de l'arbre (40) et est en appui avec un bord de raclage (7a) contre la section de raclage (40a) directement ou contre la partie d'arbre fixée de manière non rotative sur l'arbre, s'appuie en particulier radialement contre une circonférence (8) et/ou axialement contre un épaulement radial (9) de la section de raclage (40a) directement ou indirectement.

3. Dispositif de palier selon l'une des revendications précédentes,
**caractérisé en ce que**
- la circonférence (8) est le fond (12a) d'une rainure circonférentielle (12), et/ou
- l'épaulement radial (9) est un flanc latéral (12b) d'une rainure circonférentielle (12), et le racleur (7) s'appuie de préférence seulement sur un seul des flancs latéraux (12b).

4. Dispositif de palier selon l'une des revendications précédentes,
**caractérisé en ce que**
le racleur (7) est fixé directement ou indirectement à la plaque de palier (3) et/ou à la paroi de protection contre les giclements (4), mobile dans la direction axiale (10), en particulier à un guidage de racleur (18), qui est fixé en particulier à la plaque de palier (3), et/ou
le bord de raclage (7a) situé sous le centre de la circonférence (8) est en appui contre la section de raclage (40a) ou la partie d'arbre fixée de manière non rotative sur l'arbre.

5. Dispositif de palier selon l'une des revendications précédentes,
**caractérisé en ce que**
le racleur (7) est précontraint dans la direction d'appui radiale et/ou axiale en direction de la section de raclage (40a) ou de la partie d'arbre fixée de manière non rotative sur l'arbre, en particulier au moyen d'un ressort (16).

6. Dispositif de palier selon l'une des revendications précédentes,
**caractérisé en ce que**
- le racleur (7) est un racleur (7) tournant autour d'un axe de rotation (7') disposé parallèlement et à distance de l'axe de rotation (40') de l'arbre (40), le racleur (7) s'appuyant axialement contre un épaulement radial (9) de la section de raclage (40a) ou de la partie d'arbre fixée de manière non rotative sur l'arbre, et
- en particulier, le racleur rotatif (7) et la section de raclage (40a) tournent dans des directions opposées.

7. Dispositif de palier selon l'une des revendications précédentes,
**caractérisé en ce que**
le racleur rotatif (7) est un disque de raclage (7) avec une surface de contact (7b) orientée approximativement radialement, en particulier radialement, notamment le racleur rotatif (7), en particulier le disque de raclage (7), est fixé en tant que composant séparé de manière fixe en rotation et de manière étanche dans la direction axiale (10) sur l'arbre (40) ou est formé d'une seule pièce avec ce dernier.

8. Dispositif de palier selon l'une des revendications précédentes,
**caractérisé en ce que**
dans ledit au moins un disque de raclage (7) il y a plusieurs encoches (19) dans son plus grand diamètre extérieur, réparties sur la circonférence.

9. Dispositif de palier selon l'une des revendications précédentes pour un dispositif de traitement avec deux arbres parallèles et contrarotatifs (40.1, 40.2),
**caractérisé en ce que**
- le racleur rotatif (7), en particulier le disque de raclage (7), tourne autour de l'axe de rotation (40.1') dudit un arbre (par exemple 40.1) et est de préférence au moins fixé de manière non rotative à ce dernier, et
- l'épaulement radial (9) est formé sur la section de raclage (40a) de l'autre arbre (par exemple 40.2).

10. Dispositif de palier selon l'une des revendications précédentes,
**caractérisé en ce que**
l'épaulement radial (9) ou la face frontale annulaire s'appuyant contre un disque de raclage (7.1) est formé par un flanc latéral (12b) d'une rainure circonférentielle (12), et/ou
l'épaulement radial (9) ou la face frontale annulaire en appuie contre un disque de raclage (7.1) est formé sur un autre disque de raclage (7.2) et/ou les deux disques de raclages (7.1, 7.2) sont formés de manière identique et l'épaulement radial (9) est la surface d'appui (7b) de l'autre disque de raclage (7.2), et/ou

11. Dispositif de palier selon l'une des revendications précédentes,
**caractérisé en ce que**
la rainure circonférentielle (12)
- est agencée soit dans la circonférence extérieure d'une partie d'arbre, en particulier d'un anneau (17), de préférence d'un disque annulaire (17), qui est enfiché sur la section de raclage (40a) et qui est fixé au moins de manière non rotative, et de manière étanche en particulier dans la direction axiale, et avec une distance (5),
- soit est formée par la distance axiale (15) entre deux de ces anneaux (17).

12. Dispositif de palier selon l'une des revendications précédentes,
**caractérisé en ce que**
- un anneau (17) avec une rainure circonférentielle (12) est disposée de manière non rotative sur ledit un arbre (40.1), et
- sur l'autre arbre (40.2), au moins un, de préférence plusieurs, racleurs rotatifs (7), en particulier des disques de raclages (7), sont disposés de manière non rotative, qui s'appuient chacun sur l'un des flancs latéraux (12b) de la rainure circonférentielle (12) ou sur l'une des faces radiales frontales de l'anneau (17).

13. Dispositif de palier selon l'une des revendications précédentes,
**caractérisé en ce que**
- la paroi de protection contre les giclements (4) comprend deux parties de paroi (4a) et (4b) qui sont reliées l'une à l'autre de manière amovible, en particulier par vissage, et qui se rejoignent verticalement, éventuellement avec une zone de chevauchement entre elles, et qui entourent sur leur circonférence au moins un arbre de traitement (40.140.2),
en particulier
- **en ce que** la partie supérieure de la paroi (4a) présente dans sa partie inférieure un passage ouvert vers le bas (14.1a) pour chaque arbre de traitement 40,
et/ou
- **en ce que** la partie inférieure de la paroi (4b) présente à cet effet dans sa partie supérieure un passage ouvert vers le haut (14.1b) pour chaque arbre de traitement (40) et de préférence dans sa partie inférieure un passage ouvert vers le bas (14.2) pour chaque tige racleur (18).

14. Dispositif de palier selon l'une des revendications précédentes,
**caractérisé en ce que**
- au moins un des passages ouverts vers le bas (14.1a) de la partie de paroi supérieure (4a) et/ou au moins un des passages ouverts vers le haut (14.1b) de la partie de paroi inférieure (4b) s'engage dans une rainure de l'arbre de traitement (40.1, 40.2) s'étendant dans la direction circonférentielle, et/ou
- au moins un des passages ouverts vers le bas (14.2) de la partie inférieure de la paroi (4b) s'engage dans une rainure (27) s'étendant dans la direction circonférentielle de la tige racleur (18.1, 18.2).

15. **Dispositif de traitement** (100), en particulier dispositif de compactage et/ou de perforation et/ou de séparation, avec au moins un arbre de traitement (40) monté à rotation dans son boîtier au moyen d'au moins un dispositif de palier (1),
**caractérisé en ce que**
- l'agencement de paliers (1) de l'arbre de traitement (40) est adaptée selon l'une des revendications précédentes,
- en particulier, au moins un racleur non rotatif (7) est identique aux racleurs (7) présents dans la section de traitement (40b) dudit au moins un arbre de traitement (40.1).
